# FASCICULE DE BREVET EUROPEEN

(11) **EP 2 230 412 B1**
(45) Date de publication et mention de la délivrance du brevet: **20.06.2012**
(21) Numéro de dépôt: 10447008.3
(22) Date de dépôt: 15.03.2010
(51) Int. Cl.: F16B 41/00, B60R 9/048, F16B 31/02

(54) **Bouton tournant sécurisé**
Sicherheitsdrehgriff
Secure rotary knob

(30) Priorité: 16.03.2009 BE 200900154; 23.02.2010 BE 201000109
(43) Date de publication de la demande: 22.09.2010
(73) Titulaire: Euro-Locks S.A., 6600 Bastogne (BE)
(72) Inventeur: Gresse, Michel, 6600 Bastogne (BE)
(74) Mandataire: Powis de Tenbossche, Roland

(56) Documents cités:
- EP-A- 0 350 474
- EP-A- 0 494 062
- WO-A-2005/035924
- DE-A1- 3 538 244
- DE-A1- 4 137 378
- JP-A- 59 190 003

## Description

La présente invention a pour objet un bouton associé à un élément choisi parmi :
- un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'ecrou correspondant, et dans un deuxième sens, avantageusement anti horlogique, opposé audit premier sens.

On connaît des boutons associés à un écrou destiné à être fixé par vissage sur une tige filetée. Ce bouton connu comprend :
- un support présentant un passage pour la tige filetée sur laquelle doit être vissé l'écrou,
- un couvercle monté sur ledit support et définissant avec ledit support une chambre,
- un mécanisme associé audit écrou, ledit mécanisme étant situé dans ladite chambre et étant monté mobile dans ladite chambre, et
- un dispositif de verrouillage comprenant un rotor commandé par une clef, ledit rotor étant mobile entre une position ouverte dans laquelle une liaison est formée entre d'une part le mécanisme et, d'autre part, le couvercle ou support pour permettre la transformation d'un mouvement de rotation du couvercle ou support en un mouvement de rotation de l'écrou par rapport à la tige filetée dans le sens de la fixation dudit écrou sur ladite tige filetés ou dans le sens du dévissage de l'écrou par rapport à la tige filetée, et une position fermée dans laquelle la rotation du support ou du couvercle n'entraîne pas la rotation de l'élément fixé sur ledit écrou ou tige filetée correspondant
dans lequel ledit élément (1) est solidaire da plateau (13) monté à rotation par rapport au support (3) et/en au couvercle (5).

Un tel bouton a été commercialisé par EURO-LOCKS S.A. sous la référence Bouton débrayable B 577 (voir page 3.17 du catalogue EURO-LOCKS S.A. du 19/06/01) et est décrit dans le document WO 2005/035924.

Bien que ce bouton connu présente de nombreux avantages pour sécuriser des objets, la pratique a montré que ce bouton présentait toutefois certains inconvénients, dont
a) il était possible de verrouiller le bouton alors que l'écrou n'était pas suffisamment vissé sur la tige. Dans un tel cas, il était parfois possible de dévisser l'écrou, avec le bouton en position verrouillée (position dans laquelle le bouton ne permet pas de visser l'écrou sur la tige filetée).
b) En cas d'application d'un couple de serrage trop important lors du vissage de l'écrou sur la tige filetée, il est arrivé que le bouton ou une partie de celui-ci soit détérioré, rendant alors éventuellement tout dévissage ultérieur impossible.
c) il est arrivé que des utilisateurs aient oubliés de verrouiller le bouton, oubliant de la sorte de sécuriser l'un ou l'autre objet.

L'invention a pour objet un bouton permettant de résoudre un ou des problèmes mentionnés ci-avant, en particulier au moins deux des problèmes mentionnés ci-avant, de préférence tous les problèmes mentionnés ci-avant.

L'invention a pour objet un bouton associé à un élément choisi parmi :
- un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'écrou correspondant, et dans un deuxième sens, avantageusement anti horlogique, opposé audit premier sens pour retirer l'élément de sa position de fixation (par exemple dévissage partiel ou total de l'écrou par rapport à la tige filetée, par exemple pour que le bouton ou partie de celui-ci n'exerce plus un effort de pression sur une face d'un objet à sécuriser ou d'un système pour sécuriser un objet) ,
ledit bouton comprenant :
- un support présentant un passage soit pour la tige filetée destinée à être fixée par rotation sur l'élément en forme d'écrou, soit pour l'élément sous forme de tige filetée destinée à être fixée par rotation dans un écrou,
- un couvercle monté sur ledit support et définissant avec ledit support une chambre,
- un plateau associé audit élément, ledit plateau étant situé dans ladite chambre et étant monté mobile dans ladite chambre, et
- un dispositif de verrouillage comprenant un rotor commandé par une clef et mobile entre une position ouverte dans laquelle une liaison est formée entre d'une part le plateau et, d'autre part, le couvercle ou support pour permettre au moins la transformation d'un mouvement de rotation du couvercle ou support en un mouvement de rotation de l'élément par rapport à la tige filetée ou l'écrou correspondant dans le sens du dévissage dudit élément à ladite tige filetée ou écrou correspondant, et une position fermée dans laquelle la rotation du support ou du couvercle n'entraîne pas la rotation de l'élément fixé sur ledit écrou ou tige filetée correspondant.

Le bouton suivant l'invention est caractérise
en ce qu'il comporte un système permettant un mouvement de rotation du couvercle et/ou support dans la position ouverte du dispositif de verrouillage, lors de la fixation de l'élément sur la tige filetée ou écrou correspondant, lorsque le couple de serrage de l'élément sur la tige filetée ou écrou correspondant est supérieur à un couple de serrage maximal donné supérieur audit couple de serrage minimal donné,
en ce que le dispositif de verrouillage comprend une pièce pivotant dans la chambre entre
- une position de travail dans laquelle une liaison est formée entre d'une part le plateau et, d'autre part, le couvercle ou support pour permettre au moins la transformation d'un mouvement de rotation du couvercle ou support en-un mouvement de rotation de l'élément par rapport à la tige filetée ou l'écrou correspondant dans le sens du dévissage dudit élément à ladite tige filetée ou écrou correspondant lorsque le couple de serrage de élément sur la tige filetée ou écrou correspondant est inférieur à un couple de serrage maximal donné supérieur audit couple de serrage minimal donné, et
- une position de repos dans laquelle la rotation du support ou du couvercle n'entraîne pas la rotation de élément fixé sur ledit écrou ou tige filetée correspondant au moins pour un couple de serrage supérieur au couple de serrage minimal donné, et
en ce que la pièce pivotante présente une ou des dents aptes à coopérer avec une ou des dents du plateau solidaire dudit élément lorsque la pièce pivotante est en position de travail, lesdites dents de la pièce pivotante et du plateau solidaire de l'élément étant adaptés pour assurer un mouvement de pivotement de la pièce pivotante de sa position de travail vers une position de repos lors de la fixation de l'élément sur la tige filetée ou écrou correspondant, lorsque le couple de serrage de l'élément sur la tige filetée ou écrou correspondant est supérieur à un couple de serrage maximal donné.

Selon une forme de réalisation avantageuse, le bouton comprend un moyen pour maintenir la pièce pivotante en position de travail lorsque le couple de serrage de l'élément sur la tige filetée ou écrou correspondant est inférieur au couple de serrage maximal donné, et un moyen pour maintenir la pièce pivotante en position de repos (a) lorsque le dispositif de verrouillage est en position fermée et (b) lorsque le couple de serrage de l'élément sur la tige filetée ou l'écrou correspondant a été supérieur au couple de serrage maximal donné après un mouvement du dispositif de verrouillage vers sa position ouverte.

Selon un détail avantageux de l'invention, le dispositif de verrouillage comprend un rotor logé de manière amovible ou retirable dans un logement, en particulier d'un stator, du dispositif de verrouillage, le retrait du rotor hors de son logement étant opérable au moyen d'une clef de retrait, tandis que le placement du rotor dans son logement est opérable avec ou sans clef.
De façon avantageuse, le rotor amovible présente une butée adaptée pour agir sur une partie de la pièce pivotante, lorsque cette dernière est en position de repos, pour la pivoter vers sa position de travail.
De préférence, le rotor placé dans son logement comporte un pied adapté pour agir sur au moins une partie de la pièce pivotante pour commander le pivotement de celle-ci entre sa position de repos et sa position de travail, par une rotation du rotor dans son logement, ledit pied étant en outre profilé pour agir, lors de son placement dans son logement, sur au moins une partie de la pièce pivotante lorsque cette dernière est en position de repos, pour la faire pivoter vers, de préférence dans, sa position de travail.
En particulier, le pied présente une première face extrême tournée vers le support et une deuxième face extrême opposée à ladite première face extrême, cette deuxième face extrême étant sensiblement plane et sensiblement perpendiculaire à l'axe de rotation du rotor, ledit pied étant attaché par une jambe au corps du rotor, ladite jambe étant adaptée et agencée par rapport ladite face extrême supérieure du pied pour que ladite face extrêmes supérieures présente un ou des bords d'appui, tandis que la pièce pivotante présente une ou des butées présentant une face sensiblement plane tournée vers le support, ladite face de la ou de butées coopérant avec un ou des bords du pied en position fermée du dispositif de verrouillage de manière à s'opposer au retrait du rotor hors de son logement.

Selon un détail d'une forme de réalisation, le plateau porte un anneau ou un disque présentant sur sa face extérieure courbe ou sensiblement cylindrique une série de dents aptes à coopérer avec une ou des dents de la pièce pivotante en position de travail.

Selon une forme de réalisation particulièrement avantageuse, le système permettant un mouvement de rotation du couvercle et/ou support dans la position ouverte du dispositif de verrouillage, lors de la fixation de l'élément sur la tige filetée ou écrou correspondant, lorsque le couple de serrage de l'élément sur la tige filetée ou écrou correspondant est supérieur à un couple de serrage maximal donné supérieur audit couple de servage minimal donné, comprend :
- une ou des pattes attachées à un corps central solidaire du support ou du couvercle, pour lesquelles chaque patte présente une extrémité libre et une extrémité reliée au corps central par un ou des bras de manière à ce que la patte considérée soit écartée dudit corps central, le ou les bras et/ou la partie de la patte considérée adjacente du ou des bras formant une zone (par exemple un point ou une ligne) de flexion élastique pour la patte considérée, ladite zone de flexion présentant sensiblement un axe de flexion sensiblement parallèle à l'axe de rotation de l'élément, chaque patte présentant une première face tournée vers le corps central solidaire du support ou couvercle, et une deuxième face opposée à cette première face, ladite deuxième face présentant une série de dents;
- un anneau porté par le plateau sur lequel est attaché l'élément, ledit anneau présentant une face interne portant une série de dents,
dans lequel les dents de l'anneau et les dents de la ou des pattes sont adaptées les unes aux autres,
* de manière à ce que lorsque le couple de serrage est inférieur au couple de serrage maximal donné, le mouvement de rotation du support ou couvercle dans ledit premier sens de rotation de l'élément entraîne la rotation de la ou des pattes et celle de l'anneau, et donc de l'élément, et
* de manière à ce que lorsque le couple de serrage est supérieur ou égal au couple de serrage maximal donné, le mouvement de rotation du support ou couvercle dans ledit premier sens de rotation de l'élément entraîne la rotation de la ou des pattes, ainsi que leur flexion par glissement d'une ou de dents de la ou des pattes sur des dents de l'anneau, de sorte que l'élément ne subit pas de rotation.

Un autre bouton suivant l'invention est un bouton associé à un élément choisi parmi :
- un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'écrou correspondant, et dans un deuxième sens, avantageusement anti horlogique, opposé audit premier sens,
ledit bouton comprenant :
- un support présentant un passage soit pour la tige filetée destinée à être fixée par rotation sur l'élément en forme d'écrou, soit pour l'élément sous forme de tige filetée destinée à être fixée par rotation dans un écrou,
- un couvercle monté sur ledit support et définissant avec ledit support une chambre,
- un plateau associé audit élément, ledit plateau étant situé dans ladite chambre et étant monté mobile dans ladite chambre, et
- un dispositif de verrouillage comprenant un rotor commandé par une clef et mobile entre une position ouverte dans laquelle une liaison est formée entre d'une part le plateau et, d'autre part, le couvercle ou support pour permettre au moins la transformation d'un mouvement de rotation du couvercle ou support en un mouvement de rotation de l'élément par rapport à la tige filetée ou l'écrou correspondant dans le sens du dévissage dudit élément à ladite tige filetée ou écrou correspondant, et une position fermée dans laquelle la rotation du support ou du couvercle n'entraîne pas la rotation de l'élément fixé sur ledit écrou ou tige filetée correspondant,
ledit bouton étant caractérisé en ce que le dispositif de verrouillage comprend un rotor logé de manière amovible ou retirable dans un logement, en particulier d'un stator, du dispositif de verrouillage, le retrait du rotor hors de son logement étant opérable au moyen d'une clef de retrait, tandis que le placement du rotor dans son logement est opérable avec ou sans clef.
De façon avantageuse, le rotor amovible présente une butée adaptée pour agir sur une partie de la pièce pivotante, lorsque cette dernière est en position de repos, pour la pivoter vers sa position de travail.

De préférence, le rotor placé dans son logement comporte un pied adapté pour agir sur au moins une partie de la pièce pivotante pour commander le pivotement de celle-ci entre sa position de repos et sa position de travail, par une rotation du rotor dans son logement, ledit pied étant en outre profilé pour agir, lors de son placement dans son logement, sur au moins une partie de la pièce pivotante lorsque cette dernière est en position de repos, pour la faire pivoter vers, de préférence dans, sa position de travail.
En particulier, le pied présente une première face extrême tournée vers le support et une deuxième face extrême opposée à ladite première face extrême, cette deuxième face extrême étant sensiblement plane et sensiblement perpendiculaire à l'axe de rotation du rotor, ledit pied étant attaché par une jambe au corps du rotor, ladite jambe étant adaptée et agencée par rapport ladite face extrême supérieure du pied pour que ladite face extrêmes supérieures présente un ou des bords d'appui, tandis que la pièce pivotante présente une ou des butées présentant une face sensiblement plane tournée vers le support, ladite face de la ou de butées coopérant avec un ou des bords du pied en position fermée du dispositif de verrouillage de manière à s'opposer au retrait du rotor hors de son logement. Avantageusement, l'anneau présentant une série de dents sur sa face interne présente sur sa face extérieure courbe ou sensiblement cylindrique une série de dents aptes à coopérer avec une ou des dents de la pièce pivotante en position de travail.

Toujours un autre bouton suivant l'invention est un bouton associé à un élément choisi parmi : - un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'écrou correspondant, et dans un deuxième sens, avantageusement anti horlogique, opposé audit premier sens,
ledit bouton comprenant :
- un support présentant un passage soit pour la tige filetée destinée à être fixée par rotation sur l'élément en forme d'écrou, soit pour l'élément sous forme de tige filetée destinée à être fixée par rotation dans un écrou,
- un couvercle monté sur ledit support et définissant avec ledit support une chambre,
- un plateau associé audit élément, ledit plateau étant situé dans ladite chambre et étant monté mobile dans ladite chambre, et
- un dispositif de verrouillage comprenant un rotor commandé par une clef et mobile entre une position ouverte dans laquelle une liaison est formée entre d'une part le plateau et, d'autre part, le couvercle ou support pour permettre au moins la transformation d'un mouvement de rotation du couvercle ou support en un mouvement de rotation de l'élément par rapport à la tige filetée ou l'écrou correspondant dans le sens du dévissage dudit élément à ladite tige filetée ou écrou correspondant, et une position fermée dans laquelle la rotation du support ou du couvercle n'entraîne pas la rotation de l'élément fixé sur ledit écrou ou tige filetée correspondant,
ledit bouton étant caractérisé en ce que le système permettant un mouvement de rotation du couvercle et/ou support dans la position ouverte du dispositif de verrouillage, lors de la fixation de l'élément sur la tige filetée ou écrou correspondant, lorsque le couple de serrage de l'élément sur la tige filetée ou écrou correspondant est supérieur à un couple de serrage maximal donné supérieur audit couple de serrage minimal donné, comprend :
- une ou des pattes attachées à un corps central solidaire du support ou du couvercle, pour lesquelles chaque patte présente une extrémité libre et une extrémité reliée au corps central par un ou des bras de manière à ce que la patte considérée soit écartée dudit corps central, le ou les bras et/ou la partie de la patte considérée adjacente du ou des bras formant une zone (par exemple un point ou une ligne) de flexion élastique pour la patte considérée, ladite zone de flexion présentant sensiblement un axe de flexion sensiblement parallèle à l'axe de rotation de l'élément, chaque patte présentant une première face tournée vers le corps central solidaire du support ou couvercle, et une deuxième face opposée à cette première face, ladite deuxième face présentant une série de dents;
- un anneau porté par le plateau sur lequel est attaché l'élément, ledit anneau présentant une face interne portant une série de dents,
dans lequel les dents de l'anneau et les dents de la ou des pattes sont adaptées les unes aux autres,
* de manière à ce que lorsque le couple de serrage est inférieur au couple de serrage maximal donné, le mouvement de rotation du support ou couvercle dans ledit premier sens de rotation de l'élément entraîne la rotation de la ou des pattes et celle de l'anneau, et donc de élément, et
* de manière à ce que lorsque le couple de serrage est supérieur ou égal au couple due serrage maximal donné, le mouvement de rotation du support ou couvercle dans ledit premier sens de rotation de l'élément entraîne la rotation de la ou des pattes, ainsi que leur flexion par glissement d'une ou de dents de la ou des pattes sur des dents de l'anneau, de sorte que l'élément ne subit pas de rotation.
Avantageusement, l'anneau présentant une série de dents sur sa face interne présente sur sa face extérieure courbe ou sensiblement cylindrique une série de dents aptes à coopérer avec une ou des dents de la pièce pivotante en position de travail.

L'invention a également pour objet un bouton associé à un élément agissant en tant qu'écrou (1) destiné à être fixé par rotation sur une tige filetée (2), de préférence d'un boulon, en exerçant un couple de serrage minimal donné (Cm),
ladite rotation de l'élément se faisant par rapport à un axe de rotation (R) correspondant soit à l'axe longitudinal de la tige filetée, soit à l'axe central de l'écrou, ladite rotation s'opérant dans un premier sens (R1), avantageusement horlogique, pour fixer l'élément sur la tige filetée, et dans un deuxième sens (R2), avantageusement anti horlogique, opposé audit premier sens (R1) pour retirer l'élément de sa position de fixation. Ce bouton, de préférence un bouton présentant une ou plusieurs caractéristiques reprises dans les revendications, comprend :
- un support (3) présentant un passage (4) pour la tige filetée (2) destinée à être fixée par rotation sur l'élément en forme d'écrou (1),
- un couvercle (5) monté sur ledit support (3) et définissant avec ledit support une chambre (6),
- un plateau (13) associé audit élément (1), ledit plateau (13) étant situé dans ladite chambre et étant monté mobile dans ladite chambre par rapport audit support (3), et
- un dispositif de verrouillage (8) comprenant un rotor (9) commandé par une clef et mobile entre (a1) une position ouverte ou non verrouillée dans laquelle une liaison est formée entre d'une part le plateau (13) et, d'autre part, le couvercle (5) ou support (3) pour permettre au moins la transformation d'un mouvement de rotation du couvercle ou support en un mouvement de rotation de l'élément (1) par rapport à la tige filetée (2) au moins dans le sens du dévissage dudit élément à ladite tige filetée, de préférence dans le sens du dévissage et de vissage, et (a2) une position fermée ou verrouillée dans laquelle aucune liaison n'est formée entre d'une part le plateau (13) est, d'autre part, le couvercle (5) ou support (3) de sorte qu'une rotation du couvercle ou du support (3) n'entraîne pas de rotation dudit plateau (13).

Dans le bouton suivant l'invention, le plateau (13) est associé à un corps (113B) formant une chambre (113C) dans laquelle s'étend au moins partiellement l'élément en forme d'écrou (1), ledit corps présentant également une ouverture pour laisser passer la tige (2) dans la chambre au moins vers l'élément (1), ledit élément (1) comportant un système (110) présentant au moins un filet adapté pour coopérer avec le filet de la tige (2).
Ladite chambre présente au moins une face inclinée (113D) par rapport à un plan perpendiculaire à l'axe de rotation (R) de l'élément (1).
Le système (110) comporte au moins une pièce mobile (110A) présentant une face (110D) adaptée pour coopérer avec la face inclinée (113D) de la chambre (13) avec une face (110D) du système (110), de manière à ce que la pièce (110A) soit au moins mobile dans la chambre (113C) dudit corps (113B)
- (a) dans une direction parallèle à l'axe de rotation (R) du couvercle (5) et/ou du support (3), entre au moins une première position dans laquelle le système (110) génère un couple de serrage de l'élément (1) sur la tige filetée (2) inférieur au couple de serrage minimum donné ou déterminé (Cm), et une deuxième position pour laquelle une face (110D) de la pièce (110A) prend appui sur ladite face inclinée (113D) de la chambre (113C) de manière à ce que le système (110) génère un couple de serrage de l'élément (1) sur la tige filetée (2) ou écrou égal ou supérieur au couple de serrage minimum donné ou déterminé (Cm), et
- (b) dans une direction radiale par rapport à l'axe de rotation (R) du couvercle (5) et/ou du support (3) entre une première position radiale dans laquelle l'élément (1) peut être déplacé axialement par rapport à la tige (2) avec et sans mouvement de rotation du couvercle (5) ou du support (3), et une deuxième position radiale dans laquelle l'élément (1) ne peut se déplacer axialement par rapport à la tige (2) qu'avec un mouvement de rotation du couvercle (5) ou du support (3).

Lorsque la pièce (110A) est dans sa position écartée de la tige 2 (première position radiale), il est possible de déplacer, par mouvement de translation, sans rotation, relativement la tige (2) par rapport à l'élément écrou de manière à enfoncer l'extrémité libre de la tige dans la chambre du plateau et dans ou vers la chambre définie par le couvercle 5 et le support 3, c'est-à-dire vers une position de serrage du bouton. Ceci permet d'éviter de devoir faire un nombre de rotation trop important du bouton pour arriver à une position proche de la position de serrage maximal. Ceci permet donc une fixation rapide du bouton, tout en assurant un serrage minimal.

Lorsqu'une face du corps (113B) touche une paroi portant la tige (2), il n'est plus possible de déplacer le corps (113B) vers la paroi portant la tige (2). Il suffit alors de tourner le bouton d'un nombre de tours limité, par exemple de 1/4 à 5 tours, en particulier ½ tour, 1 tour, 2 tours, 3 tours, pour serrer le bouton contre la paroi. Ce mouvement de rotation permet à assurer le serrage désiré, mais également assure que la pièce soit déplacée vers sa deuxième position radiale, assurant un contact important entre la tige (2) et la pièce (110A).
Dans une forme de réalisation, lorsqu'une face du corps (113B) touche une paroi portant la tige (2) et qu'il n'est plus possible de déplacer le corps (113B) vers la paroi portant la tige (2), un léger mouvement axial arrière (mouvement de translation tendant à retirer la tige hors de la chambre du couvercle (5) peut entraîner un mouvement de la pièce 110A vers sa deuxième position radiale, assurant alors un contact important entre la tige (2) et la pièce (110A).

Selon une forme de réalisation avantageuse, le déplacement axial de la pièce (110A) dans la chambre (113C) entre lesdites première position et deuxième position est guidé par au moins un moyen de guidage (113E), ledit moyen de guidage (113E) étant avantageusement un moyen adapté pour limiter, de préférence éviter un mouvement de rotation relatif entre ladite pièce (110A) et ledit plateau (13) par rapport à l'axe de rotation (R) couvercle (5) et/ou du support (3).

De préférence, le système (110) comporte au moins trois pièces (110A), chacune desdites pièces (110A) étant au moins mobile dans la chambre (113C) dudit corps (113B)
- (a) dans une direction parallèle à l'axe de rotation (R) du couvercle (5) et/ou du support (3), entre au moins une première position dans laquelle le système (110) génère un couple de serrage de l'élément (1) sur la tige filetée (2) inférieur au couple de serrage minimum donné ou déterminé (Cm), et une deuxième position pour laquelle une face (110D) de la pièce (110A) prend appui sur ladite face inclinée (1113D) de la chambre (1113C) de manière à ce que le système (110) génère un couple de serrage de l'élément (1) sur la tige filetée (2) ou écrou égal ou supérieur au couple de serrage minimum donné ou déterminé (Cm), et
- (b) dans une direction radiale par rapport à l'axe de rotation (R) du couvercle (5) et/ou du support (3) entre une première position radiale dans laquelle l'élément (1) peut être déplacé axialement par rapport à la tige (2) avec et sans mouvement de rotation du couvercle (5) ou du support (3), et une deuxième position radiale dans laquelle l'élément (1) ne peut se déplacer axialement par rapport à la tige (2) qu'avec un mouvement de rotation du couvercle (5) ou du support (3).

Selon un détail d'une forme de réalisation préférée, les pièces (110A) sont reliées l'une à l'autre ou les unes aux autres par un moyen élastiquement déformable ou compressible (115).

En particulier, les pièces (110A) présentent chacune une gorge ou un passage adapté pour recevoir une partie d'un anneau fermé ou non ou d'une portion d'un anneau, ledit anneau ou portion d'anneau étant élastiquement déformable ou compressible lors du mouvement de la pièce entre lesdites première position et deuxième position.

Plus spécifiquement, les pièces (110) présentent chacune une gorge adaptée pour recevoir une partie d'un anneau fermé ou non ou d'une portion d'un anneau, tandis que la partie d'anneau ou de portion d'anneau présente dans la gorge est adaptée pour prendre appui sur la face inclinée de la chambre (113C) au moins dans la deuxième position des pièces (110A).

Selon un autre détail d'une forme de réalisation avantageuse, les pièces (110A) sont distinctes l'une de l'autre et présentent des faces latérales sensiblement parallèles à l'axe (R), des espaces (110F) entre pièces (110A) étant définis entre les faces latérales tournées l'une vers l'autre de deux pièces adjacentes, tandis que la chambre (113C) comporte au moins trois pattes (113E) formant des moyens de guidage pour les pièces (1110A), lesdites pattes (113E) s'étendant au moins partiellement dans les espaces (110F) entre pièces (110A).
De préférence, lesdites pattes (113E) présentent chacune une gorge adaptée pour recevoir une partie d'un anneau de portion d'anneau reliant les pièces (110A) entre elles, lors du mouvement des pièces (110A) de leur première position vers leur deuxième position.

Selon toujours un autre détail de formes de réalisation avantageuses, les pièces (110A) sont reliées l'une à l'autre ou les unes aux autres par un moyen élastiquement déformable ou compressible permettant des mouvements relatifs des pièces les unes par rapport aux autres lorsque les pièces sont dans leur première position radiale.

Selon une autre particularité de formes de réalisation, le plateau présente au moins une dent ou des dents, adaptée(s) pour coopérer avec une pièce ou face du rotor dans la position ouverte du dispositif de verrouillage, la dent ou dents, d'une part, et la pièce ou face du rotor d'autre part étant adaptées pour ne pas venir en contact l'une avec l'autre en position fermée du dispositif de verrouillage.

Dans une forme de réalisation avantageuse, le dispositif de verrouillage (8) comprend un rotor (9) logé de manière amovible ou retirable dans un logement (24), en particulier d'un stator, du dispositif de verrouillage, le retrait du rotor hors de son logement (24) étant opérable au moyen d'une clef de retrait, tandis que le placement du rotor dans son logement est opérable avec ou sans clef.
De préférence, le rotor (9) amovible présente une butée (94) adaptée pour être logée dans une chambre du support (3) ladite butée étant mobile dans ladite chambre lors de la rotation du rotor entre sa position ouverte et sa position de verrouillage, ladite butée (94) prenant appui sur une face de la chambre du support (3) dans la position de verrouillage de manière à s'opposer à la séparation du couvercle (5) par rapport au support (3).

Plus particulièrement, la butée et la chambre du support (3) sont adaptées pour permettre, en position ouverte du dispositif de verrouillage (8), un retrait du rotor (9) hors de son logement au moyen d'une clef de retrait.

Selon une particularité d'une forme de réalisation, le corps (113B) du plateau est associé à un moyen élastique ou déformable élastiquement par compression, de préférence une rondelle, destiné à s'étendre entre la paroi portant la tige (2) et la paroi du corps (113B) tournée vers la paroi portant la tige.

L'invention a encore pour objet un système pour sécuriser un objet par au moins le vissage d'au moins un élément choisi parmi :
- un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'écrou correspondant, et dans un deuxième sens, avantageusement anti horlogique, opposé audit premier sens,
dans lequel au moins un élément est associé à un quelconque bouton suivant l'invention.

De façon avantageuse, l'objet à sécuriser est un ou des vélos placés sur un porte-vélos, une vanne, un porte bagage, un ou des skis placés sur un porte-skis, une ou des roues de véhicules attachées à un support.

Des particularités et détails de formes de réalisation préférées de boutons suivant l'invention (forme de réalisation donnée à titre d'exemple uniquement) seront décrites ci-après, avec référence au dessins ci-annexés.

Dans ces dessins,
- la figure 1 est une vue en perspective d'une première forme de réalisation d'un bouton suivant l'invention;
- la figure 2 est une autre vue en perspective du bouton de la figure 1;
- la figure 3 est une vue en perspective intérieure du couvercle du bouton de la figure 1, sans le rotor;
- la figure 4 est une vue en perspective du support, du rotor et de la pièce pivotante en position de travail;
- la figure 5 est une vue en plan du support et de la pièce pivotante en position de travail, sans le rotor;
- la figure 6 est une vue en perspective du support, du rotor et de la pièce pivotante en position de repos;
- la figure 7 est une vue en plan du support et de la pièce pivotante en position de repos avec le pied du rotor partiellement représenté;
- la figure 8 est une vue en coupe du bouton ;
- les figures 9 à 12 sont des vues du support avec la pièce pivotante en position de repos (avec et sans représentation du pied de commande du rotor), et après pivotement par rotation du pied de commande;

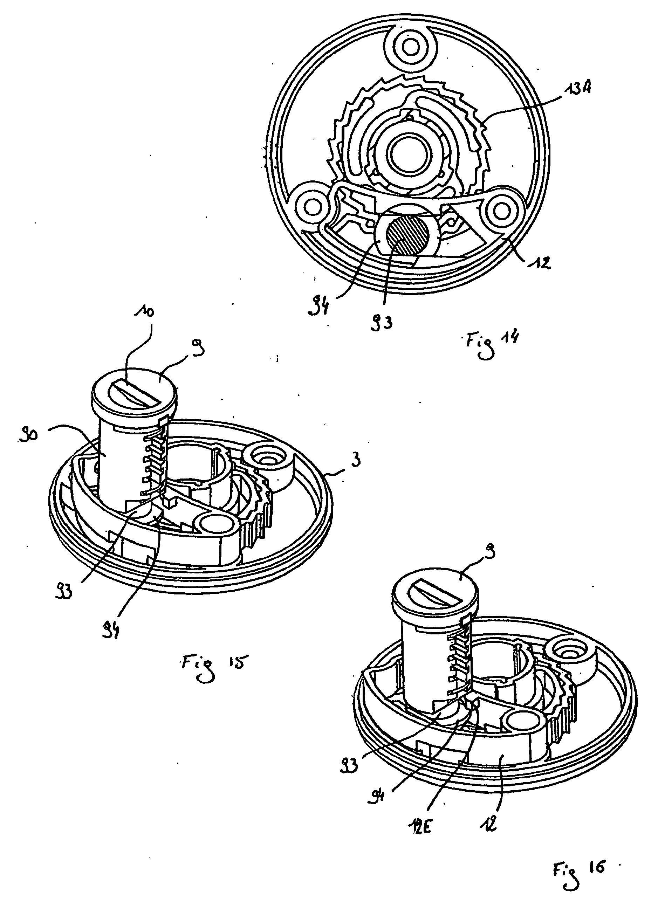

- les figures 13 à 15 montrent le placement ou le retrait du rotor avec la pièce pivotante en position de travail;
- la figure 16 montre que la pièce de travail s'oppose au retrait du rotor en position de repos de celle-ci;

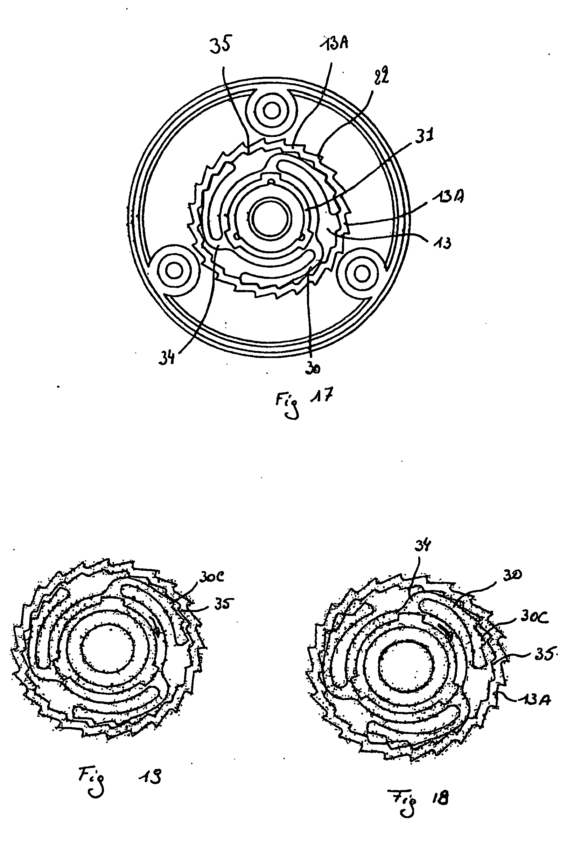

- les figures 17 à 19 montrent le fonctionnement des pattes flexibles avec les dents de l'anneau du plateau solidaire de l'écrou,
- la figure 20 est une vue en perspective éclatée d'un autre bouton suivant l'invention en position verrouillée (rotation libre du bouton par rapport à la tige 2);
- la figure 21 est une autre vue en perspective éclatée du bouton de la figure 20;
- la figure 22 est une vue en coupe (ligne XXII-XXII) du bouton de la figure 20, avec le dispositif de verrouillage en position verrouillée, bouton non vissé sur la tige filetée;
- la figure 23 est une vue en coupe du bouton de la figure 20, avec le dispositif de verrouillage en position verrouillée, bouton déplacé par translation axiale le long de la tige filetée;
- la figure 24 est une vue en coupe du bouton de la figure 20, avec le dispositif de verrouillage en position non verrouillée (rotation de 90° du rotor par rapport à la position du rotor de la figure 22, l'amplitude de rotation aurait pu être différente, par exemple 150°, 180°, 220°, etc.), bouton non vissé sur la tige filetée;
- la figure 25 est une vue en coupe du bouton de la figure 20, avec le dispositif de verrouillage en position non verrouillée, bouton déplacé axialement le long de la tige et vissé sur la tige filetée;
- les figures 26 à 28 sont des vues du plateau denté (en perspective, en coupe et vue de ' devant,
- les figures 29 à 31 sont des vues à plus grande échelles des pièces du système de blocage du bouton de la figure 20,
- la figure 32 est une vue en perspective partiellement éclatée d'un bouton similaire à celui de la figure 1, le rotor étant montré associé au support,
- la figure 33 est une vue en plan du support du bouton de la figure 32,
- la figure 34 est une vue en coupe du bouton de la figure 32.

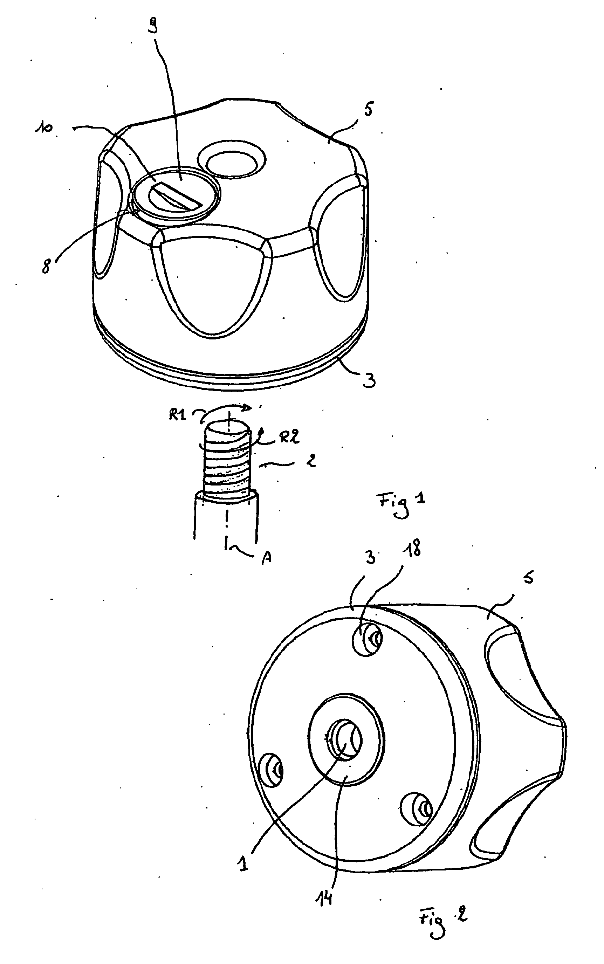

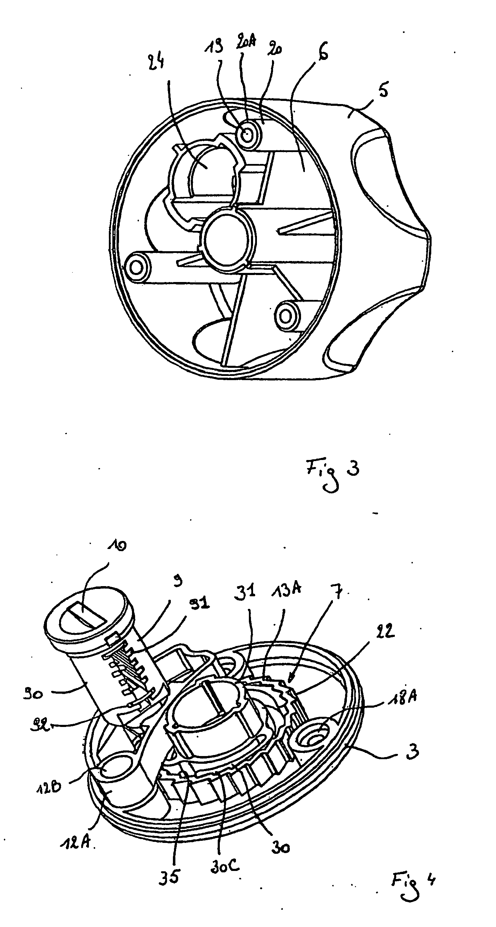

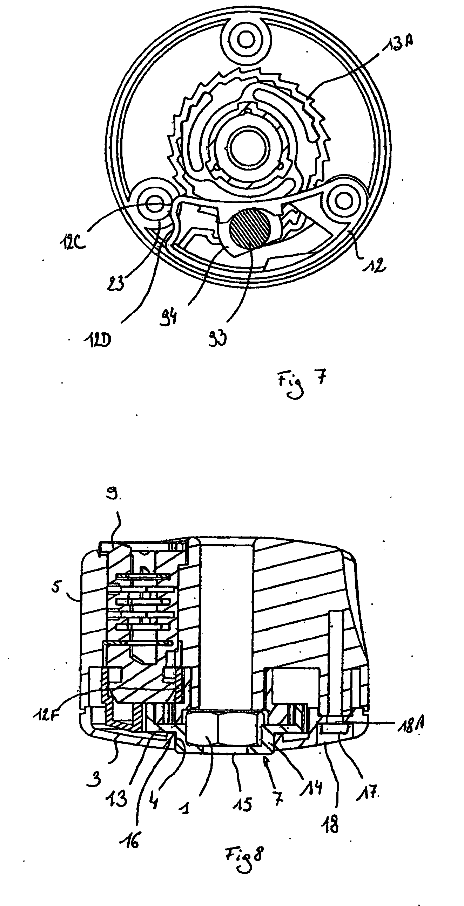

Le bouton représenté à la figure 1 comprend :
- un écrou 1 (voir figures 2 et 8) destiné à être fixé par rotation sur une tige filetée 2 d'un système de protection pour un objet (non représenté) en exerçant un couple de serrage minimal donné, ladite rotation de l'écrou 1 se faisant par rapport à un axe de rotation correspondant soit à l'axe longitudinal A de la tige filetée, ladite rotation s'opérant dans un premier sens R1, avantageusement horlogique, pour fixer l'écrou 1 sur la tige filetée 2, et dans un sens opposé R2, avantageusement anti horlogique, pour dévisser l'écrou 1,
- un support 3 présentant un passage 4 pour la tige filetée destinée à être fixée par rotation sur l'écrou 1,
- un couvercle 5 (le couvercle ou capot présente une série de renfoncements pour faciliter sa manipulation) monté sur ledit support 3 et définissant avec ledit support une chambre interne 6 (voir figure 3),
- un plateau 13 associé audit écrou 1, ledit plateau étant situé dans ladite chambre 6 et étant monté mobile dans ladite chambre et par rapport au support 3, et
- un dispositif de verrouillage 8 comprenant un rotor 9 commandé par une clef destinée à être logée dans la fente 10 du rotor 9, ledit rotor étant mobile entre une position ouverte dans laquelle une liaison est formée entre d'une part le plateau 13 et, d'autre part, le couvercle 5 pour permettre au moins la transformation d'un mouvement de rotation du couvercle ou support en un mouvement de rotation de l'écrou 1 par rapport à la tige filetée, et une position fermée dans laquelle la rotation du support ou du couvercle n'entraîne pas la rotation de l'écrou fixé sur la tige filetée 2.

Le bouton comporte un système 11 permettant un mouvement de rotation du couvercle 5 et du support 3 dans la position ouverte du dispositif de verrouillage 8, lors du vissage de l'écrou 1 sur la tige filetée 2, lorsque le couple de serrage de l'écrou 1 sur la tige filetée 2 est supérieur à un couple de serrage maximal donné CM supérieur audit couple de serrage minimal donné Cm.

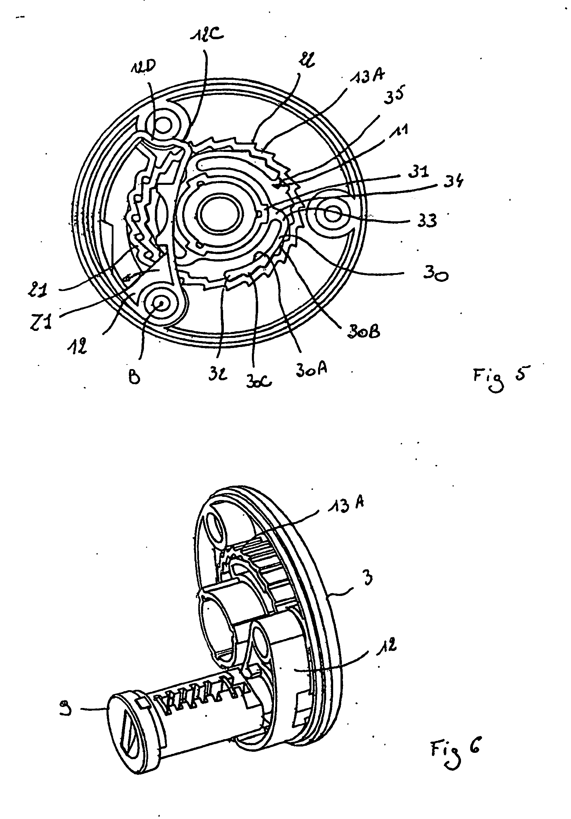

Le dispositif de verrouillage 8 comprend une pièce pivotante 12 pivotant dans la chambre entre
- une position de travail (figures 4 et 5) dans laquelle une liaison est formée entre d'une part le plateau 13 et, d'autre part, le support 3 pour permettre au moins la transformation d'un mouvement de rotation du couvercle et support en un mouvement de rotation de l'écrou par rapport à la tige filetée 2 dans le sens R2 du dévissage dudit écrou 1 sur la tige filetée 2 lorsque le couple de serrage C de l'écrou 1 sur la tige filetée 2 est inférieur à un couple de serrage maximal donné CM supérieur audit couple de serrage minimal donné Cm, et
- une position de repos (figures 6 et 7) dans laquelle la rotation du support 3 et du couvercle ou capot 5 n'entraîne pas la rotation de l'écrou 1 fixé sur la tige filetée 2 au moins pour un couple de serrage supérieur au couple de serrage minimal donné Cm.

L'écrou 1 est solidaire d'un plateau 13 monté à rotation par rapport au support 3. Le plateau 13 présente une protubérance centrale 14 creuse recevant une partie de l'écrou 1. Cette protubérance 14 présente un passage 15 pour la tige filetée 2. Le plateau 13 prend appui sur un rebord circulaire 16 du passage central 4 du support 3, tandis que la protubérance 14 prend appui est au moins partiellement engagée dans le passage 4. Le plateau 13 est avantageusement réalisé en un matériau à faible friction sur le rebord 16 du support 3, de manière à assurer une libre rotation du support 3 et couvercle 5 par rapport à l'écrou 1 et le plateau 13 lorsque la pièce pivotante 12 est dans sa position de repos.

Le support 3 et le couvercle 5 sont solidarisés l'un à l'autre au moyen de vis ou boulons 17, dont la tête est logée dans une cavité ouverte 18 du support 3, cavité 18 prolongé par un canal 18A pour le passage de la tige de la vis ou boulon 17 dans le canal 19 que présentent des tubes 20 solidaires du couvercle 5. Le fond des cavités 18 sert de surface d'appui pour la tête des vis ou boulons 17.

La pièce pivotante 12 présente des dents 21 aptes à coopérer avec des dents 22 du plateau 13 solidaire de l'écrou 1 lorsque la pièce pivotante 12 est en position de travail (figures 4 et 5), lesdites dents 21 de la pièce pivotante 12 et du plateau 13 solidaire de l'écrou 1 étant adaptées pour assurer un mouvement de pivotement Z1 de la pièce pivotante 12 de sa position de travail vers une position de repos (figures 6 et 7) lors de la fixation de l'écrou 1 sur la tige filetée 2, lorsque le couple de serrage C de l'écrou sur la tige filetée 2 est supérieur à un couple de serrage maximal donné CM. Le plateau 13 porte un anneau ou couronne 13A qui présente sur sa face extérieure les dents 22.

La pièce pivotante 12 est montée pivotante par rapport à un axe B qui est parallèle à l'axe A de l'écrou 1 ou de la tige filetée 2. La pièce pivotante 12 présente une oreille 12A avec un passage central 12B pour un tube 20 solidaire du couvercle 5. Ceci permet d'assurer un bon centrage de l'axe de pivotement B par rapport au support 3 et par rapport au couvercle 5.

La pièce pivotante 12 présente une extrémité 12C présentant un renfoncement ou cavité 12D coopérant avec une partie d'un tube 20 pour maintenir la pièce pivotante en position de travail tant que le couple de serrage C est inférieur au couple de serrage maximal.

Tant que le couple de serrage C de l'écrou sur la tige filetée est inférieur au couple de serrage maximal autorisé CM, la pièce pivotante 12 en position de travail reste dans cette position de travail, c'est-à-dire que les dents 21 de la pièce pivotante 12 coopèrent avec des dents 22 de l'anneau 13A. Dès que le couple de serrage dépasse le couple de serrage maximal autorisé CM, la rotation du couvercle 5 entraîne la rotation de la pièce pivotante 12 par rapport au plateau 13, ce mouvement de rotation relatif du couvercle 5 par rapport au plateau 13 entraîne un glissement des dents 21 de la pièce pivotante 12 sur les dents 22 de l'anneau 13 A du plateau 13. Ce mouvement de glissement se traduit en un mouvement de rotation de la pièce pivotante (Z1) autour de son axe B. Ce mouvement de rotation s'opère lorsque la cavité 12D de l'extrémité 12C de la pièce pivotante 12 est déplacée par rapport à la face d'appui d'une partie d'un tube 20, face d'appui utilisé pour maintenir la pièce pivotante 12 en position de travail tant que le couple de serrage C est inférieur au couple de serrage maximal. Lorsque le déplacement (par rotation autour de l'axe B) de la cavité 12D est suffisant par rapport à la face d'appui, l'extrémité 12C de la pièce pivotante 12 est profilée pour assurer une rotation supplémentaire (Z1) vers la position de repos de la pièce pivotante. Dans cette position de repos, une autre partie de l'extrémité 12C de la pièce pivotante prend appui sur la surface d'appui 23 de manière à maintenir la pièce pivotante dans cette position en l'absence de mouvement du rotor 9.

Le dispositif de verrouillage 8 comprend un rotor 9 logé de manière amovible ou retirable dans un logement 24 du couvercle 5, le retrait du rotor 9 hors de son logement étant opérable au moyen d'une clef de retrait, tandis que le placement du rotor dans son logement est opérable avec ou sans clef, en particulier avec au moins une clef adaptée pour commander la rotation du rotor et non son retrait, et/ou avec une clef de retrait.

Le rotor 9 présente un corps principal 90 sensiblement cylindrique comportant une fente 10 pour une clef, soit une clef de verrouillage, soit une clef de retrait pour retirer le rotor 9 hors de son logement 24. Le corps 90 présente une série d'ouvertures ou passages 91 pour une série de paillettes de verrouillage et une ouverture ou passage 92 pour une paillette pour bloquer le rotor dans son logement. La paillette de blocage est commandée par la clef de retrait pour que la paillette s'étende dans le passage 92 du rotor.
Le corps principal 90 est prolongé par une jambe cylindrique 93 se terminant par un pied 94. Le pied 94 comporte :
- une première partie 95 adjacente de la jambe 93, cette première partie ayant une section perpendiculaire à l'axe de rotation du rotor qui est sensiblement rectangulaire dont les deux côtés longitudinaux sont sensiblement parallèles entre eux et distants entre eux d'une distance correspondant sensiblement au diamètre de la jambe 93, lesdits côtés longitudinaux étant reliés entre eux par deux côtés latéraux convexes en arc de cercle, et
- une deuxième partie 96 s'étendant sur la face de la première partie opposée à la face adjacente de la jambe 93, cette deuxième partie ayant une forme sensiblement de tronc de pyramide, la partie de section transversale la plus petite étant la plus éloignée de la première partie. Le tronc de pyramide a avantageusement pour base la section transversale de la première partie (section perpendiculaire à l'axe de rotation du rotor, axe parallèle à l'axe de pivotement B de la pièce pivotante 12).

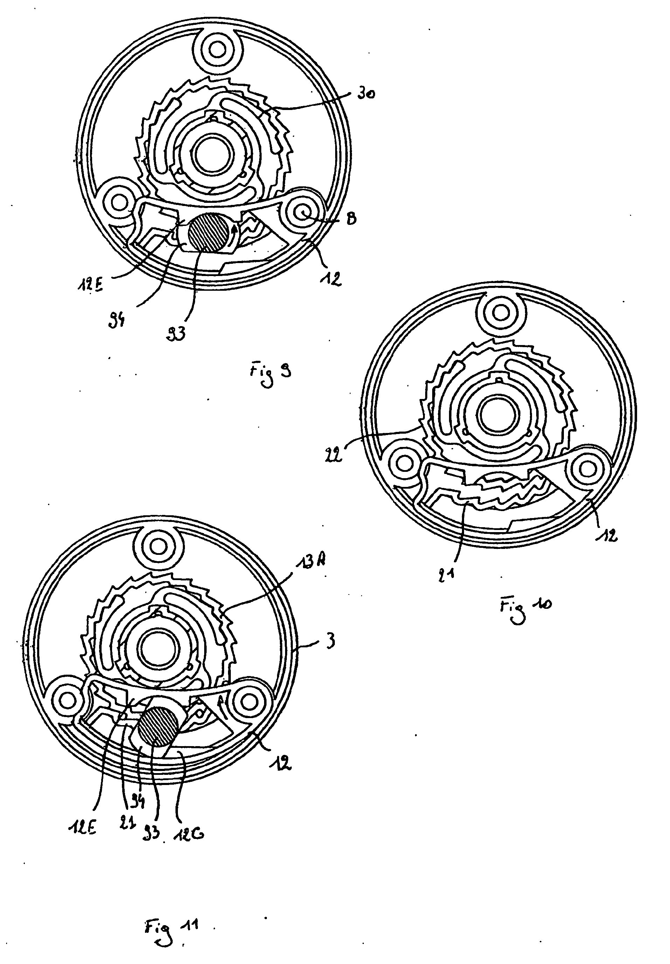

Lorsque le rotor est placé dans son logement 24, le pied 94 est adapté pour agir sur une paroi 12F de la pièce pivotante 12, lorsque cette dernière 12 est en position de repos, pour la pivoter vers sa position de travail.
Cette paroi 12F porte une protubérance 12E présentant une face cylindrique concave de rayon correspondant sensiblement au rayon de l'extrémité convexe de la première partie 95 du pied 94. Cette protubérance 12E s'étend au niveau de la jambe 93, lorsque le rotor 9 est placé dans son logement. Cette protubérance 12E sert de butée s'opposant au retrait du rotor 9, lorsque la pièce pivotante 12 est en position de repos (voir figure 9, le pied 94 prend appui sur la protubérance 12E de la pièce pivotante en cas de tentative de retrait du rotor 9, en position de repos de la pièce pivotante 12).

Le retrait du rotor 9 hors de son logement par une clef de retrait n'est possible que lorsque la pièce pivotante est en position de travail.

Lorsqu'un rotor 9, par exemple un nouveau rotor, doit être engagé dans le logement 24 du couvercle 5, deux cas sont possibles.

### Premier cas: pièce pivotante en position de travail

Dans ce cas le déplacement axial du rotor dans le logement ne nécessite pas de mouvement de la pièce pivotante. Seul un mouvement des paillettes est nécessaire. Ce mouvement des paillettes vers l'intérieur du rotor est par exemple commandé par une clef de retrait ou par un guide que présente le logement 24.

### deuxième cas : pièce pivotante en position de repos

Ce cas peut par exemple arriver si après avoir retiré un rotor 9 (mise en position de travail de la pièce 12), un utilisateur visse l'écrou 1 du bouton sur une tige filetée 2avec un couple de serrage C supérieur au couple de serrage maximal autorisé CM, de sorte que la pièce pivotante 12 pivote dans sa position de repos. Dans cette position le couvercle 5 peut tourner librement.

Lors du déplacement axial du rotor et du pied dans le logement 24, au moins une face de la partie en tronc de pyramide 96 vient en contact avec la protubérance 12E de la pièce pivotante 12, ce qui entraîne un pivotement de la pièce 12 de sa position de repos vers sa position de travail.

Pour éviter une rotation excessive du rotor dans son logement 24, la pièce 12 porte une butée 12G, butée avantageusement portée par une paroi 12H de la pièce 12 opposée à la paroi 12F.

Pour dévisser l'écrou fixé sur la tige filetée 2 avec un couple de serrage maximal autorisé, il y a lieu de faire tourner le rotor pour que le pied 94 agisse sur la paroi 12F pour faire pivoter la pièce 12 dans sa position de travail de manière à ce que des dents 21 de la pièce 12 entraîner les dents 22 de la couronne ou anneau 13A.

Le système 11 permettant un mouvement de rotation du couvercle 5 et du support 3 dans la position ouverte du dispositif de verrouillage, lors de la fixation de l'écrou 1 sur la tige filetée 2, lorsque le couple de serrage C de l'écrou 1 sur la tige filetée 2 est supérieur à un couple de serrage maximal donné ou autorisé CM supérieur audit couple de serrage minimal donné Cm, comprend :
- des pattes 30 attachées à un corps central 31 avantageusement creux (corps présentant sensiblement un axe de symétrie correspondant à l'axe A) solidaire du couvercle 5. Chaque patte 30 présente une extrémité libre 32 et une extrémité 33 reliée au corps central 31 par un bras 34 de manière à ce que la patte 30 considérée soit écartée dudit corps central 31. Le bras et/ou la partie de la patte 30 considérée adjacente du bras 34 forment une zone de flexion élastique pour la patte considérée 30. La zone de flexion présente sensiblement un axe de flexion sensiblement parallèle à l'axe de rotation A de l'écrou. Chaque patte 30 présente une première face 30A tournée vers le corps central 31 solidaire du couvercle 5, et une deuxième face 30B opposée à cette première face 30A, ladite deuxième face 30B présentant une série de dents 30C.
- l'anneau 13A porté par le plateau 13 sur lequel est attaché l'écrou 1, ledit anneau 13A présentant une face interne portant une série de dents 35 destinées à coopérer avec des dents des pattes 30.

Les dents 35 de l'anneau 13A et les dents 30C des pattes 30 sont adaptées les unes aux autres,
* de manière à ce que lorsque le couple de serrage C est inférieur au couple de serrage maximal donné ou autorisé CM, le mouvement de rotation R1 du support et du couvercle 5 dans le sens de rotation horlogique entraîne la rotation des pattes 30 et donc celle de l'anneau 13A et de l'écrou 1, et
* de manière à ce que lorsque le couple de serrage C est supérieur ou égal au couple de serrage maximal donné ou autorisé CM, le mouvement de rotation RI du support 3 et du couvercle 5 dans ledit premier sens de rotation de l'écrou entraîne la rotation des pattes 30, ainsi que leur flexion par glissement de dents 30C des pattes 30 sur des dents 35 de l'anneau 13A, de sorte que l'écrou ne subit pas de rotation.

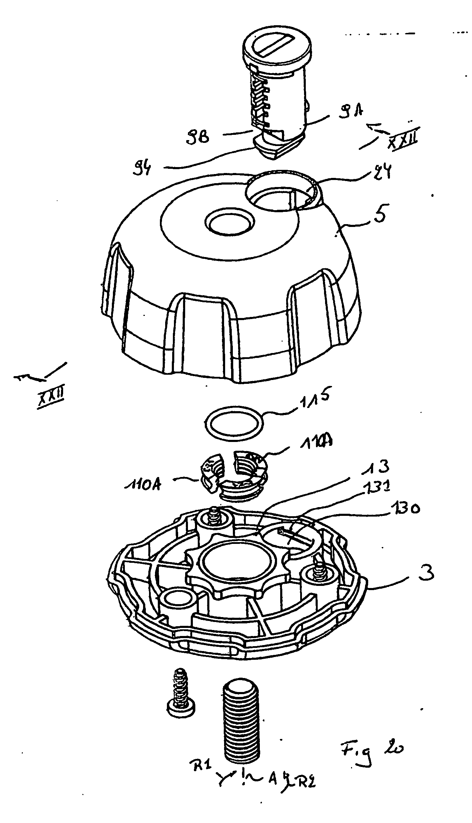

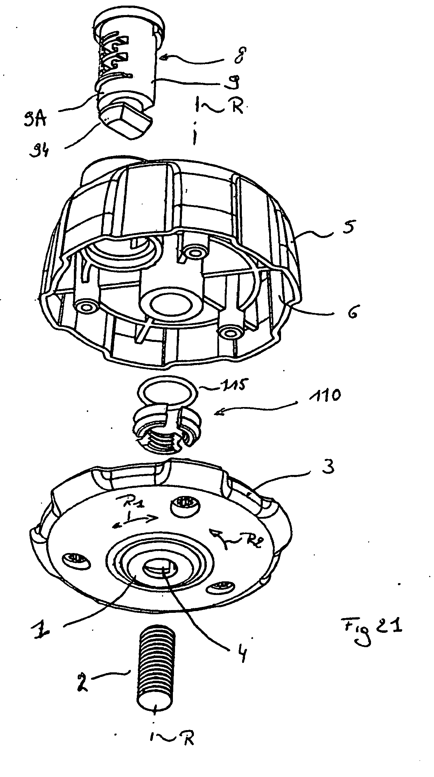

Le bouton représenté aux figures 20 à 31 comprend :
- un écrou (1) destiné à être fixé par rotation sur une tige filetée (2) portée par une paroi, de préférence d'un boulon, en exerçant un couple de serrage minimal donné (Cm), ladite rotation de l'élément se faisant par rapport à un axe de rotation (R) correspondant soit à l'axe longitudinal de la tige filetée 2, soit à l'axe central de l'écrou, ladite rotation s'opérant dans un premier sens (R1), avantageusement horlogique, pour fixer l'élément sur la tige filetée, et dans un deuxième sens (R2), avantageusement anti horlogique, opposé audit premier sens (R1) pour retirer la tige hors de l'écrou,
- un support (3) présentant un passage (4) pour la tige filetée (2) destinée à être fixée par rotation sur l'élément en forme d'écrou (1),
- un couvercle (5) monté sur ledit support (3) et définissant avec ledit support une chambre (6), et
- un plateau (13) associé audit élément (1), ledit plateau (13) étant situé dans ladite chambre et étant monté mobile dans ladite chambre par rapport audit support (3),
- un dispositif de verrouillage (8) comprenant un rotor (9) commandé par une clef et mobile entre (a1) une position ouverte ou non verrouillée dans laquelle une liaison est formée entre d'une part le plateau (13) et, d'autre part, le couvercle (5) ou support (3) pour permettre au moins la transformation d'un mouvement de rotation du couvercle ou support en un mouvement de rotation de l'élément (1) par rapport à la tige filetée (2) au moins dans le sens du dévissage dudit écrou sur ladite tige filetée, de préférence dans le sens du dévissage et de vissage, et (a2) une position fermée ou verrouillée dans laquelle aucune liaison n'est formée entre d'une part le plateau (13) et, d'autre part, le couvercle (5) ou support (3) de sorte qu'une rotation du couvercle ou du support (3) n'entraîne pas de rotation dudit plateau (13).

Le plateau (13) est associé à un corps (113B) formant une chambre (113C) dans laquelle s'étend au moins partiellement l'élément en forme d'écrou (1), ledit corps présentant également une ouverture pour laisser passer la tige dans la chambre au moins vers l'élément (1), ledit élément (1) comportant un système (110) présentant au moins un filet adapté pour coopérer avec le filet de la tige (2).
Ladite chambre présente au moins une face inclinée (113D) par rapport à un plan perpendiculaire à l'axe de rotation (R) de l'élément (1).
Le système (110) comporte trois pièces mobiles (110A) présentant chacune une face (110D) adaptée pour coopérer avec la face inclinée (113D) de la chambre (113C) avec une face (110D) du système (110), de manière à ce que chacune des pièces (110A) soit au moins mobile dans la chambre (113C) dudit corps (113B)
- (a) dans une direction parallèle à l'axe de rotation (R) du couvercle (5) et/ou du support (3), entre au moins une première position dans laquelle le système (110) génère un couple de serrage de l'élément (1) sur la tige filetée (2) inférieur au couple de serrage minimum donné ou déterminé (Cm), et une deuxième position pour laquelle une face (110D) de la pièce (110A) prend appui sur ladite face inclinée (113D) de la chambre (113C) de manière à ce que le système (110) génère un couple de serrage de l'élément (1) sur la tige filetée (2) égal ou supérieur au couple de serrage minimum donné ou déterminé (Cm), et
- (b) dans une direction radiale par rapport à l'axe de rotation (R ) du couvercle (5) et/ou du support (3) entre une première position radiale dans laquelle l'élément (1) peut être déplacé axialement par rapport à la tige (2) avec et sans mouvement de rotation du couvercle (5) ou du support (3), et une deuxième position radiale dans laquelle l'élément (1) ne peut se déplacer axialement par rapport à la tige (2) qu'avec un mouvement de rotation du couvercle (5) ou du support (3).

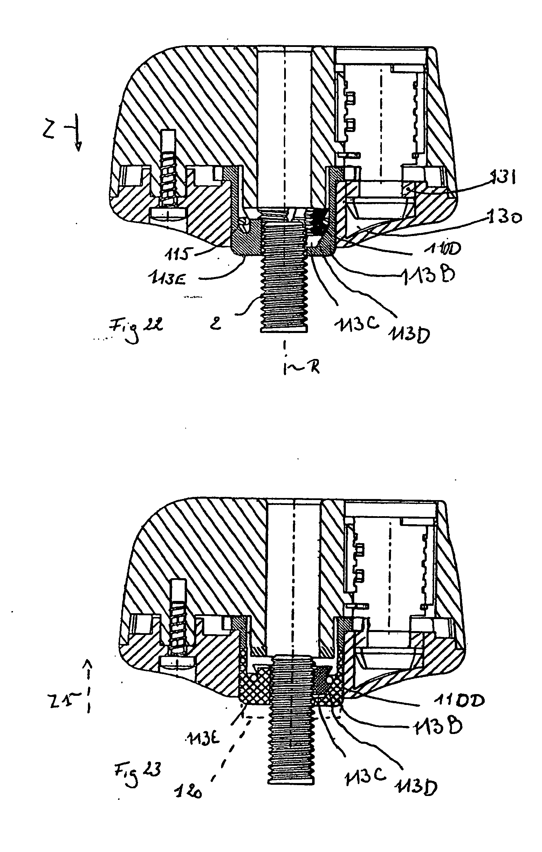

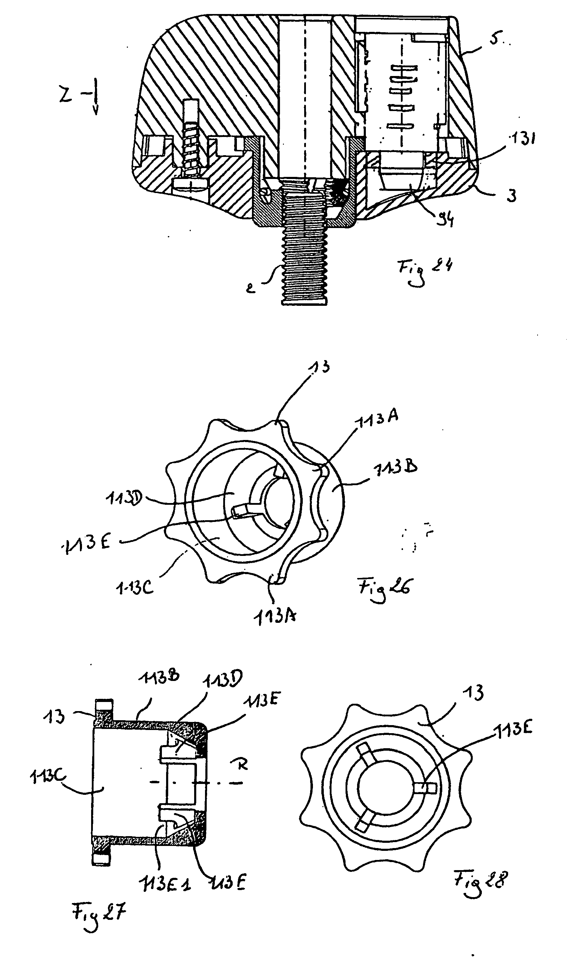

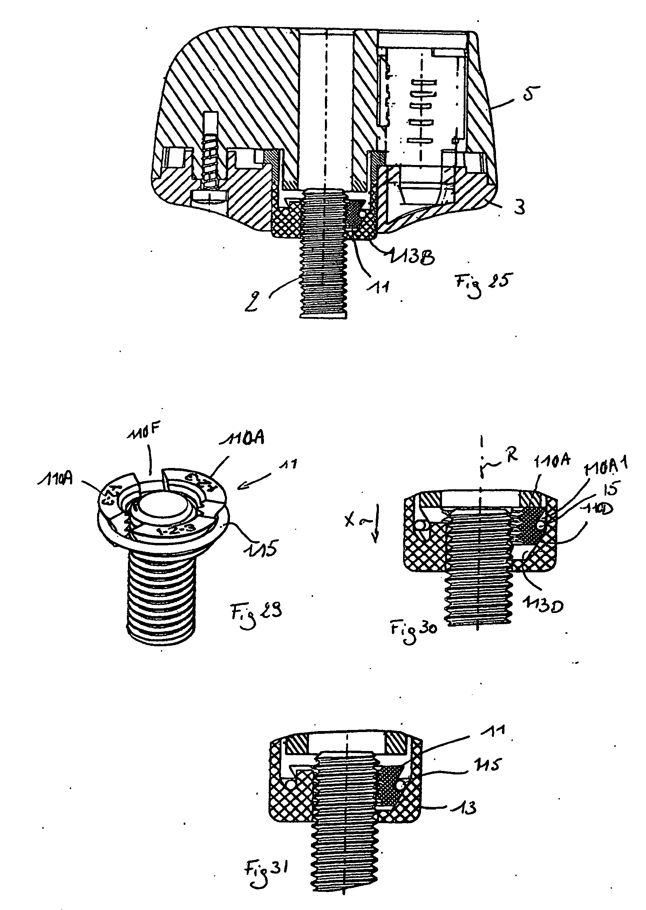

Lorsque la pièce (110A) est dans sa position écartée de la tige 2 (première position radiale
- figure 22 ou 24), il est possible de déplacer, par mouvement de translation (flèche Z), sans rotation, relativement la tige (2) par rapport à l'élément écrou de manière à enfoncer l'extrémité libre de la tige dans la chambre du plateau et dans ou vers la chambre définie par le couvercle 5 et le support 3, c'est-à-dire vers la position de serrage du bouton. Ceci permet d'éviter de devoir faire un nombre de rotation trop important du bouton pour arriver à une position proche de la position de serrage. Ce mouvement est possible à la fois avec le rotor en position verrouillée (figure 24) et en position déverrouillée (fig. 22), et donc permet un serrage par simple pression du bouton vers la paroi portant la tige 2. Lorsqu'une face du corps (113B) touche une paroi portant la tige (2) ou une paroi d'un objet à fixer, il n'est plus possible de déplacer le corps (113B) vers la paroi portant la tige (2).
Dans la position de la figure 25, il suffit alors de tourner le bouton d'un nombre limité de tours, par exemple de 1/4 à 5 tours, en particulier ½ tour, 1 tour, 2 tours, 3 tours, pour serrer le bouton contre la paroi. Ce mouvement de rotation permet à assurer le serrage désiré, mais également assure que la pièce soit déplacée vers sa deuxième position radiale, assurant un contact important entre la tige (2) et la pièce (110A).

Dans la position représentée à la figure 23, lorsqu'une face (113F) du corps (113B) prend appui directement ou via une ou des pièces intermédiaires une paroi portant la tige (2) et qu'il n'est plus possible de déplacer le corps (13B) vers la paroi portant la tige (2), les pièces 110A sont amenées dans leur deuxième position radiale, assurant alors un contact de serrage important entre la tige et les pièces 11A. Eventuellement, un léger mouvement axial arrière Z1 (mouvement de translation tendant à retirer la tige 2 hors de la chambre du couvercle 5) peut entraîner un mouvement de la pièce 110A vers sa deuxième position radiale, assurant alors un contact important entre la tige (2) et la pièce (110A). Ce léger mouvement arrière Z1 peut par exemple être généré par une rondelle 120 qui peut être comprimée élastiquement entre la face 113F du corps 113B et la paroi portant la tige 2.

Le déplacement axial de chacune des pièces (110A) dans la chambre (113C) entre lesdites première position et deuxième position est guidé par au moins un moyen de guidage (113E), ledit moyen de guidage (113E) étant avantageusement un moyen adapté pour limiter, de préférence éviter un mouvement de rotation relatif entre ladite pièce (110A) et ledit plateau (13) par rapport à l'axe de rotation (R) couvercle (5) et/ou du support (3).

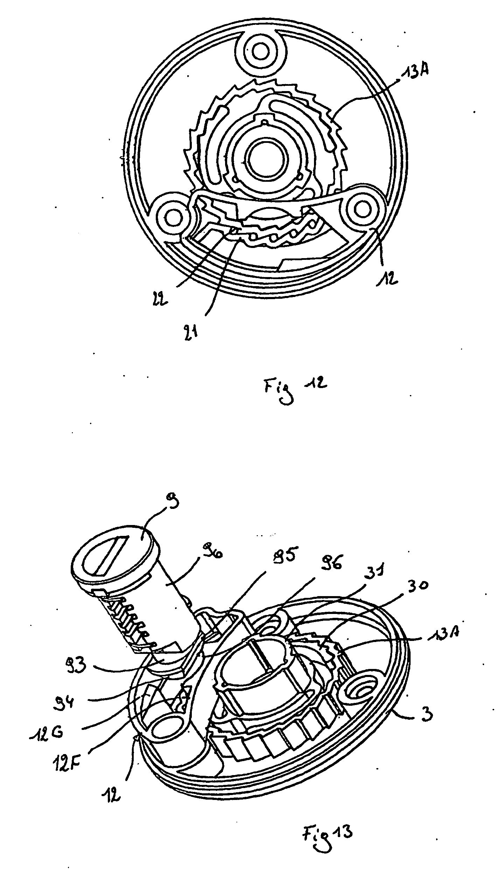

Les pièces (110A) sont reliées l'une à l'autre ou les unes aux autres par un joint torique 115 en caoutchouc élastiquement déformable ou compressible. Les pièces (110A) présentent chacune une gorge 110A1 adapté pour recevoir une partie du joint torique 115.
Plus spécifiquement, les pièces (110A) présentent chacune une gorge 110A1 adaptée pour recevoir une partie du joint torique 115, tandis que la partie du joint torique 115 présente dans la gorge est adaptée pour prendre appui sur la face inclinée 113D de la chambre (113C) au moins dans la deuxième position des pièces (110A) ( figure 12).

Les pièces (110A) sont distinctes l'une de l'autre et présentent des faces latérales sensiblement parallèles à l'axe (R), des espaces (110F) entre pièces (110A) étant définis entre les faces latérales tournées l'une vers l'autre de deux pièces adjacentes, tandis que la chambre (113C) comporte au moins trois pattes (113E) formant des moyens de guidage pour les pièces (110A), lesdites pattes (113E) s'étendant au moins partiellement dans les espaces (110F) entre pièces (110A). Les pattes (113E) présentent chacune une gorge 113E1 adaptée pour recevoir une partie d'un anneau de portion d'anneau reliant les pièces (110A) entre elles, lors du mouvement des pièces (110A) de leur première position (figure 30) vers leur deuxième position (figure 31).

Selon une autre particularité de formes de réalisation, le plateau présente au moins une dent ou des dents 113A, adaptée(s) pour coopérer avec une pièce ou face du rotor 9 dans la position ouverte ou non verrouillée du dispositif de verrouillage (position dans laquelle la rotation du bouton génère un mouvement du plateau, aussi bien dans le sens R1 que dans le sens R2), la dent ou dents 113A, d'une part, et la face du rotor 9 d'autre part étant adaptées pour ne pas venir en contact l'une avec l'autre en position fermée ou verrouillée du dispositif de verrouillage 9 ( figures 22 et 23).

Dans une forme de réalisation avantageuse, le dispositif de verrouillage (8) comprend un rotor (9) logé de manière amovible ou retirable dans un logement (24), en particulier d'un stator, du dispositif de verrouillage, le retrait du rotor hors de son logement (24) étant opérable au moyen d'une clef de retrait, tandis que le placement du rotor dans son logement est opérable avec ou sans clef.

Le rotor 9 présente une partie 9B en retrait créant un passage dans lequel les dents 113A s'étendent et peuvent se déplacer librement dans la position verrouillée du dispositif de verrouillage.

Le dispositif de verrouillage (8) comprend un rotor (9) logé de manière amovible ou retirable dans un logement (24), en particulier d'un stator, du dispositif de verrouillage, le retrait du rotor hors de son logement (24) étant opérable au moyen d'une clef de retrait, tandis que le placement du rotor dans son logement est opérable avec ou sans clef.
Le rotor (9) amovible présente une butée (94) adaptée pour être logée dans une chambre 130 du support (3), ladite butée 94 étant mobile dans ladite chambre 30 lors de la rotation du rotor 9 entre sa position ouverte (figures 24 et 25) et sa position de verrouillage (figure 20) (rotation par exemple de 90°), ladite butée (94) prenant appui sur un plat 131 de la chambre du support (3) dans la position de verrouillage (figure 20) de manière à s'opposer à la séparation du couvercle (5) par rapport au support (3).

Plus particulièrement, la butée 94 et la chambre 130 du support (3) sont adaptées pour permettre, en position ouverte du dispositif de verrouillage (8), un retrait du rotor (9) hors de son logement au moyen d'une clef de retrait. Cette clef de retrait permet de déplacer un dernier cavalier ou une dernière plaquette à l'intérieur du rotor.

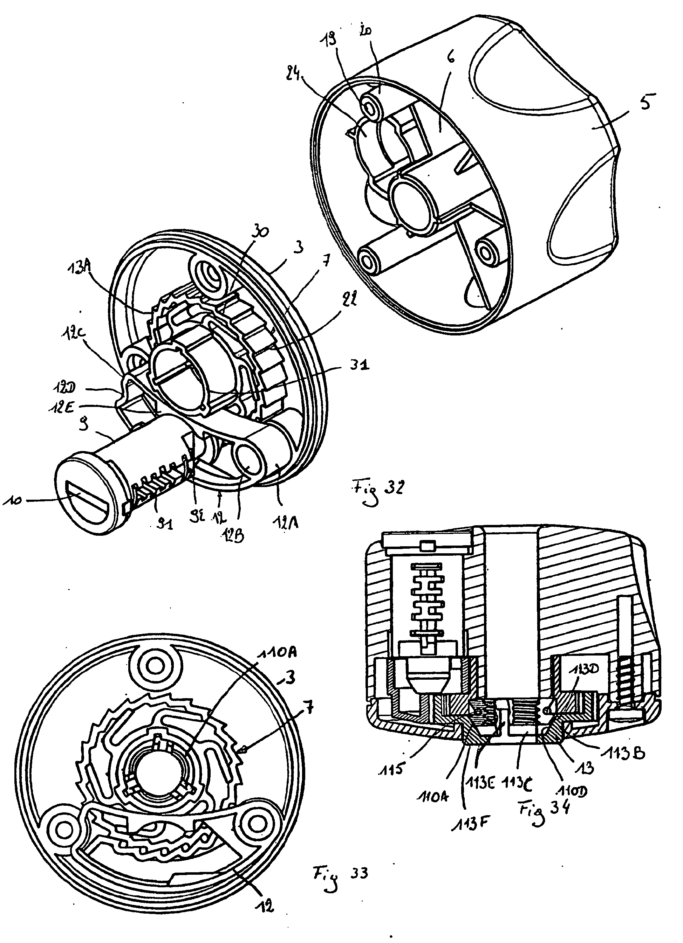

Le bouton représenté aux figures 32 à 34 est un bouton similaire à celui de la figure 1, mais associant un système 110 du bouton décrit aux figures 20 à 31, en particulier aux figures 29 à 31. Dans le bouton selon ces figures 32 à 34, le plateau 13 et le système 110 sont similaires à ceux du bouton des figures 20 à 31. Les mêmes signes de référence sont utilisés pour désigner des pièces ou parties de pièces identiques ou ayant la même fonction.

Les formes de réalisation de boutons représentés aux différentes figures trouvent de nombreuses applications dans des systèmes pour sécuriser un objet par au moins le vissage d'au moins un écrou sur une tige filetée.

L'objet à sécuriser est par exemple un ou des vélos placés sur un porte-vélo, une vanne, un porte bagage, un ou des skis placés sur un porte-skis, une ou des roues de véhicules attachées à un support, une roue de secours attachée à l'extérieur du véhicule, etc.

Les formes de réalisation de boutons représentés aux figures sont des formes préférées. Dans d'autres formes de réalisation le barillet ou rotor n'est pas du type retirable ou amovible d'un logement 24 ou du stator.
Le bouton suivant l'invention peut être muni donc d'un barillet ou rotor retirable ou non retirable par rapport à son logement ou stator.

Le dispositif de verrouillage peut également comprendre plus d'un rotor, par exemple un rotor logé de manière amovible ou retirable (par exemple au moyen d'une clef de retrait), et un rotor non amovible ou retirable au moyen d'une clef de retrait.

Le dispositif de verrouillage est par exemple du type décrit dans le brevet belge 1001815, le brevet européen 350474, dans le brevet belge 883121, dans le brevet européen 494062, ou encore dans le brevet 1016106.

## Revendications

1. Bouton associé à un élément (1) choisi parmi :
- un écrou destiné à être fixé par rotation sur une tige filetée (2), de préférence d'un boulon, en exerçant un couple de serrage minimal donné, et
- une tige filetée, de préférence d'un boulon, destinée à être fixée par rotation dans un écrou, en exerçant un couple de serrage minimal donné (Cm),
ladite rotation de l'élément se faisant par rapport à un axe de rotation (A) correspondant soit à l'axe longitudinal de la tige filetée, soit à l'axe central de écrou, ladite rotation s'opérant dans un premier sens (R1), avantageusement horlogique, pour fixer l'élément sur la tige filetée ou écrou correspondant, et dans un deuxième sens (R2), avantageusement anti horlogique, opposé audit premier sens (R1) pour retirer l'élément de sa position de fixation,
ledit bouton comprenant :
- un support (3) présentant un passage (4) soit pour la tige filetée (2) destinée à être fixée par rotation sur l'élément en forme d'écrou (1), soit pour l'élément sous forme de tige filetée destinée à être fixée par rotation dans un écrou,
- un couvercle (5) monté sur ledit support (3) et définissant avec ledit support une chambre (6),
- on plateau (13) associé audit élément (1), ledit plateau étant situé dans ladite chambre et étant monté mobile dans ladite chambre, et
- un dispositif de verrouillage (8) comprenant un rotor (9) commandé par une clef et mobile entre une position ouverte dans laquelle une liaison est formée entre d'une part le plateau (13) et d'autre part, le couvercle (5) ou support (3) pour permettre au moins la transformation d'un mouvement de rotation du couvercle ou support en un mouvement de rotation de l'élément (1) par rapport à la tige filetée (2) ou l'écrou correspondant dans le sens du dévissage dudit élément à ladite tige filetée ou écrou correspondant, et une position fermée dans laquelle la rotation du support ou du couvercle n'entraîne pas la rotation de l'élément (1) fixé sur ledit écrou ou tige filetée (2) correspondant,
dans lequel ledit élément (1) est solidaire du plateau (13) monté rotation par rapport au support (3)
et/on au couvercle (5)
**caractérisé en ce qu'**il comporte un système (11) permettant un mouvement de rotation du couvercle et/ou support dans la position ouverte du dispositif de verrouillage, lors de la fixation de l'élément sur la tige filetée ou écrou correspondant, lorsque le couple de serrage de l'élément (1) sur la tige filetée (2) ou écrou correspondant est supérieur à un couple de serrage maximal donné ou autorisé (CM) supérieur audit couple de serrage minimal donné (Cm),
**en ce que** le dispositif de verrouillage (8) comprend une pièce (12) pivotant dans la chambre entre
- une position de travail dans laquelle une liaison est formée entre d'une part le plateau (13) et, d'autre part, le couvercle (5) ou support (3) pour permettre au moins la transformation d'un mouvement de rotation du couvercle ou support en un mouvement de rotation de l'élément (1) par rapport à la tige filetée (2) ou l'écrou correspondant dans le sens du dévissage dudit élément sur ladite tige filetée ou dans l'écrou correspondant lorsque le couple de serrage de l'élément (1) sur la tige filetée (2) ou écrou correspondant est inférieur à un couple de serrage maximal donné ou autorisé (CM) supérieur audit couple de serrage minimal donné (Cm), et
- une position de repos dans laquelle la rotation du support (3) ou du couvercle (5) n'entraîne pas la rotation de l'élément (1) fixé sur ledit écrou ou tige filetée (2) correspondant pour un couple de serrage supérieur au couple de serrage minimal donné (Cm),
**en ce que** la pièce pivotante (12) présente une ou des dents (21) aptes à coopérer avec une ou des dents (22) du plateau (13) solidaire dudit élément (1) lorsque la pièce pivotante (12) est en position de travail, lesdites dents (21 ,22) de la pièce pivotante (12) et du plateau (13) solidaire de l'élément (1) étant adaptées pour assurer un mouvement de pivotement de la pièce pivotante (12) de sa position de travail vers une position de repos lors de la fixation de l'élément (1) sur la tige filetée (2) ou écrou correspondant, lorsque le couple de serrage de l'élément (1) sur la tige filetée (2) ou écrou correspondant est supérieur à un couple de serrage maximal donné ou autorisé (CM).

2. Bouton suivant la revendication 1, **caractérisé en ce qu'**il comprend un moyen pour maintenir la pièce pivotante (12) en position de travail lorsque le couple de serrage de l'élément sur la tige filetée ou écrou correspondant est inférieur au couple de serrage maximal donné ou autorisé (CM), et un moyen pour maintenir la pièce pivotante en position de repos (a) lorsque le dispositif de verrouillage (8) est en position fermée et (b) lorsque le couple de serrage de l'élément (1) sur la tige filetée (2) ou l'écrou correspondant a été supérieur au couple de serrage maximal donné après un mouvement du dispositif de verrouillage vers sa position ouverte.

3. Bouton suivant la revendication 1 ou 2, **caractérisé en ce que** le dispositif de verrouillage (8) comprend un rotor (9) logé de manière amovible ou retirable dans un logement (24), en particulier d'un stator, du dispositif de verrouillage, le retrait du rotor hors de son logement (24) étant opérable au moyen d'une clef de retrait, tandis que le placement du rotor dans son logement est opérable avec ou sans clef.

4. Bouton suivant la revendication 3, **caractérisé en ce que** le rotor (9) amovible présente une butée (94) adaptée pour agir sur une partie de la pièce pivotante (12), lorsque cette dernière est en position de repos, pour la faire pivoter vers sa position de travail.

5. Bouton suivant la revendication 4, **caractérisé en ce que** le rotor (9) placé dans son logement (24) comporte un pied (94) adapté pour agir sur au moins une partie de la pièce pivotante pour commander le pivotement de celle-ci entre sa position de repos et sa position de travail, par une rotation du rotor (9) dans son logement (24),
ledit pied (94) étant en outre profilé pour agir, lors de son placement dans son logement (24), sur au moins une partie (12E) de la pièce pivotante (12) lorsque cette dernière est en position de repos, pour la faire pivoter vers, de préférence dans, sa position de travail.

6. Bouton suivant la revendication 4, **caractérisé en ce que** le pied (94) présente une première face extrême tournée vers le support (3) et une deuxième face extrême opposée à ladite première face extrême, cette deuxième face extrême étant sensiblement plane et sensiblement perpendiculaire à l'axe de rotation du rotor, ledit pied (94) étant attaché par une jambe (93) au corps (90) du rotor, ladite jambe (93) étant adaptée et agencée par rapport ladite deuxième face extrême du pied pour que ladite deuxième face extrême présente un ou des bords d'appui, et
**en ce que** la pièce pivotante (12) présente une ou des butées (12E) présentant une face sensiblement plane tournée vers le support (3), ladite face de la ou de butées (12E) coopérant avec un ou des bords du pied (94) en position fermée du dispositif de verrouillage de manière à s'opposer au retrait du rotor (9) hors de son logement (24).

7. Bouton suivant l'une quelconque des revendications précédentes, **caractérisé en ce que** le plateau (13) porte un anneau (13A) ou un disque présentant sur sa face extérieure courbe ou sensiblement cylindrique une série de dents (22) aptes à coopérer avec une ou des dents (21) de la pièce pivotante (12) en position de travail.

8. Bouton suivant l'une quelconque des revendications précédentes, **caractérisé en ce que** le système (11) permettant un mouvement de rotation du couvercle et/ou support dans la position ouverte du dispositif de verrouillage (8), lors de la fixation de l'élément (1) sur la tige filetée (2) ou écrou correspondant, lorsque le couple de serrage de l'élément sur la tige filetée ou écrou correspondant est supérieur à un couple de serrage maximal donné ou autorisé (CM) supérieur audit couple de serrage minimal donné (Cm), comprend :
- une ou des pattes (30) attachées à un corps central (31) solidaire du support (3) ou du couvercle (5), pour lesquelles
chaque patte (30) présente une extrémité libre (32) et une extrémité (33) reliée au corps central (31) par un ou des bras (34) de manière à ce que la patte (30) considérée soit écartée dudit corps central (31), le ou les bras (34) et/ou la partie de la patte considérée adjacente du ou des bras (34) formant une zone de flexion élastique pour la patte (30) considérée, ladite zone de flexion présentant sensiblement un axe de flexion sensiblement parallèle à l'axe de rotation (A) de l'élément (1), chaque patte (30) présentant une première face (30A) tournée vers le corps central (31) solidaire du support ou couvercle, et une deuxième face (30B) opposée à cette première face, ladite deuxième face présentant une série de dents (30C);
- un anneau (13A) porté par le plateau (13) sur lequel est attaché l'élément (1), ledit anneau (13A) présentant une face interne portant une série de dents (35),
dans lequel les dents (35) de l'anneau (13) et les dents (30C) de la ou des pattes (30) sont adaptées les unes aux autres,
* de manière à ce que lorsque le couple de serrage est inférieur au couple de serrage maximal donné ou autorisé (CM), le mouvement de rotation du support ou couvercle dans ledit premier sens de rotation de l'élément entraîne la rotation de la ou des pattes et celle de l'anneau, et donc de l'élément, et
* de manière à ce que lorsque le couple de serrage est supérieur ou égal au couple de serrage maximal donné ou autorisé (CM), le mouvement de rotation du support ou couvercle dans ledit premier sens de rotation de l'élément entraîne la rotation de la ou des pattes, ainsi que leur flexion par glissement d'une ou de dents de la ou des pattes sur des dents de l'anneau, de sorte que l'élément ne subit pas de rotation.

9. Bouton suivant la revendication suivant la revendication précédente, **caractérisé en ce que** l'anneau (13A) présentant une série de dents (35) sur sa face interne présente sur sa face extérieure courbe ou sensiblement cylindrique une série de dents (22) aptes à coopérer avec une ou des dents (21) de la pièce pivotante (12) en position de travail.

10. Bouton suivant l'une quelconque des revendication précédente, associé à un élément agissant en tant qu'écrou (1) destiné à être fixé par rotation sur une tige filetée (2), **caractérisé en ce que** le plateau (13) est associé à un corps (113B) formant une chambre (113C) dans laquelle s'étend au moins partiellement l'élément en forme d'écrou (1), ledit élément (1) comportant un système (110) présentant au moins un filet adapté pour coopérer avec le filet de la tige (2),
**en ce que** ladite chambre (113C) présente au moins une face inclinée (113D) par rapport à un plan perpendiculaire à l'axe de rotation (R) de l'élément (1),
**en ce que** le système (110) comporte au moins une pièce mobile (110A) présentant une face (110D) adaptée pour coopérer avec la face inclinée (113D) de la chambre (13) avec une face (110D) du système (110), de manière à ce que la pièce (110A) soit au moins mobile dans la chambre (113C) dudit corps (113B)
- (a) dans une direction parallèle à l'axe de rotation (R) du couvercle (5) et/ou du support (3), entre au moins une première position dans laquelle le système (110) génère un couple de serrage de l'élément (1) sur la tige filetée (2) inférieur au couple de serrage minimum donné ou déterminé (Cm), et une deuxième position pour laquelle une face (110D) de la pièce (110A) prend appui sur ladite face inclinée (113D) de la chambre (113C) de manière à ce que le système (110) génère un couple de serrage de l'élément (1) sur la tige filetée (2) ou écrou égal ou supérieur au couple de serrage minimum donné ou déterminé (Cm), et
- (b) dans une direction radiale par rapport à l'axe de rotation (R) du couvercle (5) et/ou du support (3) entre une première position radiale dans laquelle l'élément (1) peut être déplacé axialement par rapport à la tige (2) avec et sans mouvement de rotation du couvercle (5) ou du support (3), et une deuxième position radiale dans laquelle l'élément (1) ne peut se déplacer axialement par rapport à la tige (2) qu'avec un mouvement de rotation du couvercle (5) ou du support (3).

11. Bouton suivant la revendication 10, **caractérisé en ce que** le déplacement axial de la pièce (110A) dans la chambre (113C) entre lesdites première position et deuxième position est guidé par au moins un moyen de guidage (1 13E), ledit moyen de guidage (113E) étant avantageusement un moyen adapté pour limiter, de préférence éviter un mouvement de rotation relatif entre ladite pièce (110A) et ledit plateau (13) par rapport à l'axe de rotation (R) couvercle (5) et/ou du support (3).

12. Bouton suivant la revendication 10 ou 11, **caractérisé en ce que** le système (110) comporte au moins trois pièces (110A), chacune desdites pièces (110A) étant au au moins mobile dans la chambre (13C) dudit corps (13B)
- (a) dans une direction parallèle à l'axe de rotation (R) du couvercle (5) et/ou du support (3), entre au moins une première position dans laquelle le système (110) génère un couple de serrage de l'élément (1) sur la tige filetée (2) inférieur au couple de serrage minimum donné ou déterminé (Cm), et une deuxième position pour laquelle une face (110D) de la pièce (110A) prend appui sur ladite face inclinée (113D) de la chambre (113C) de manière à ce que le système (110) génère un couple de serrage de l'élément (1) sur la tige filetée (2) ou écrou égal ou supérieur au couple de serrage minimum donné ou déterminé (Cm), et
- (b) dans une direction radiale par rapport à l'axe de rotation (R ) du couvercle (5) et/ou du support (3) entre une première position radiale dans laquelle l'élément (1) peut être déplacé axialement par rapport à la tige (2) avec et sans mouvement de rotation du couvercle (5) ou du support (3), et une deuxième position radiale dans laquelle l'élément (1) ne peut se déplacer axialement par rapport à la tige (2) qu'avec un mouvement de rotation du couvercle (5) ou du support (3).

13. Bouton suivant la revendication 12, **caractérisé en ce que** les pièces (110A) sont reliées l'une à l'autre ou les unes aux autres par un moyen élastiquement déformable ou compressible (115).

14. Bouton suivant la revendication 11 ou 12, **caractérisé en ce que** les pièces (110A) présentent chacune une gorge (110A1) ou un passage adapté pour recevoir une partie d'un anneau fermé ou non ou d'une portion d'un anneau, ledit anneau ou portion d'anneau étant élastiquement déformable ou compressible (115) lors du mouvement de la pièce entre lesdites première position et deuxième position, et **en ce que** la partie d'anneau ou de portion d'anneau présente dans la gorge est avantageusement adaptée pour prendre appui sur la face inclinée de la chambre (113C) au moins dans la deuxième position des pièces (110A).

15. Système pour sécuriser un objet par au moins le vissage d'au moins un élément choisi parmi : - un écrou destiné à être fixé par rotation sur une tige filetée, de préférence d'un boulon, en exerçant un couple de serrage minimal donné, et
- une tige filetée, de préférence d'un boulon, destinée à être fixée par rotation dans un écrou, en exerçant un couple de serrage minimal donné,
ladite rotation de l'élément se faisant par rapport à un axe de rotation correspondant soit à l'axe longitudinal de la tige filetée, soit à l'axe central de l'écrou, ladite rotation s'opérant dans un premier sens, avantageusement horlogique, pour fixer l'élément sur la tige filetée ou l'écrou correspondant, et dans un deuxième sens, avantageusement anti horlogique, opposé audit premier sens,
dans lequel au moins un élément est associé à un bouton suivant l'une quelconque des revendications précédentes.

16. Système suivant la revendication précédente, **caractérisé en ce que** l'objet à sécuriser est un ou des vélos placés sur un porte-vélo, une vanne, un porte bagage, un ou des skis placés sur un porte-skis, une ou des roues de véhicules attachées à un support.

## Claims

1. Knob, which is associated with an element (1) selected from:
- a nut, which is intended to be fixed by rotation on a threaded rod (2), preferably a pin, exerting a minimum given thread torque, and
- a threaded rod, preferably a pin, which is intended to be fixed by rotation in a nut, exerting a minimum given thread torque (Cm),
this rotation of the element being in relation to an axis of rotation (A) corresponding either to the longitudinal axis of the threaded rod or to the central axis of the screw, this rotation working in a first direction (R1), advantageously clockwise, to fix the element on the threaded rod or corresponding nut, and in a second direction (R2), advantageously anti-clockwise, which is opposed to this first direction (R1), to remove the element from its fixing position,
this knob comprising:
- a support (3), which has a passage (4) either for the threaded rod (2), which is intended to be fixed by rotation on the element in the form of a nut (1), or for the element in the form of a threaded rod, which is intended to be fixed by rotation in a nut,
- a cover (5), which is fitted on this support (3) and defines a chamber (6) with this support,
- a plate (13), which is associated with this element (1), this plate being situated in this chamber and being fitted so that it may move in this chamber, and
- a locking device (8), comprising a rotor (9), which is controlled by a key and may move between an open position, in which a connection is formed between the plate (13) on the one hand and the cover (5) or support (3) on the other hand, to allow at least the transformation of a rotation movement of the cover or support into a rotation movement of the element (1) in relation to the threaded rod (2) or corresponding nut in the direction for unscrewing this element on this threaded rod or corresponding nut, and a closed position, in which rotation of the support or cover does not involve rotation of the element (1) fixed on this nut or corresponding threaded rod (2),
in which this element (1) is attached to the plate (13), which is fitted by rotation in relation to the support (3) and/or cover (5).
**characterised in that** it comprises a system (11), which allows a rotation movement of the cover and/or support in
the open position of the locking device, when the element is fixed on the threaded rod or corresponding nut, when the thread torque of the element (1) on the threaded rod (2) or corresponding nut is greater than a maximum given or authorised thread torque (CM), which is greater than this minimum given thread torque (Cm),
**in that** the locking device (8) comprises a part (12), which pivots in the chamber between
- a working position, in which a connection is formed between the plate (13) on the one hand and the cover (5) or support (3) on the other hand, to allow at least the transformation of a rotation movement of the cover or support into a rotation movement of the element (1) in relation to the threaded rod (2) or corresponding nut in the direction for unscrewing this element on this threaded rod or corresponding nut, when the thread torque of the element (1) on the threaded rod (2) or corresponding nut is less than a maximum given or authorised thread torque (CM), which is greater than this minimum given thread torque (Cm), and
- a resting position, in which rotation of the support (3) or cover (5) does not involve rotation of the element (1) fixed on this nut or corresponding threaded rod (2) with a thread torque, which is greater than the minimum given thread torque (Cm), and
**in that** the pivoting part (12) has one or several teeth (21), which are able to work together with one or several teeth (22) of the plate (13), which is attached to this element (1), when the pivoting part (12) is in a working position, these teeth (21, 22) of the pivoting part (12) and the plate (13), which is attached to the element (1), being adapted to produce a pivoting movement of the pivoting part (12) from its working position towards a resting position, when the element (1) is fixed on the threaded rod (2) or corresponding nut, when the thread torque of the element (1) on the threaded rod (2) or corresponding nut is greater than a maximum given or authorised thread torque (CM).

2. Knob according to claim 1, **characterised in that** it comprises a means to maintain the pivoting part (12) in a working position, when the thread torque of the element on the threaded rod or corresponding nut is less than the maximum given or authorised thread torque (CM), and a means to maintain the pivoting part in a resting position (a), when the locking device (8) is in a closed position, and (b), when the thread torque of the element (1) on the threaded rod (2) or corresponding nut was greater than the maximum given thread torque, after a movement by the locking device towards its open position.

3. Knob according to claim 1 or 2, **characterised in that** the locking device (8) comprises a rotor (9), which is housed in a detachable or removable way in a housing (24), particularly of a stator, of the locking device, the rotor being removed from its housing (24) by means of a removal key, whereas the rotor is placed in its housing with or without a key.

4. Knob according to claim 3, **characterised in that** the detachable rotor (9) has a stop (94), which is adapted to act on a part of the pivoting part (12), when this is in the resting position, to make it pivot towards its working position.

5. Knob according to claim 4, **characterised in that** the rotor (9), which is placed in its housing (24), comprises a foot (94), which is adapted to act on at least a part of the pivoting part, to control it pivoting between its resting position and its working position, by rotation of the rotor (9) in its housing (24), this foot (94) also being contoured to act, when it is placed in its housing (24), on at least one part (12E) of the pivoting part (12), when this is in the resting position, to make it pivot towards, preferably into, its working position.

6. Knob according to claim 4, **characterised in that** the foot (94) has a first end face, which is turned towards the support (3), and a second end face, which is opposed to this first end face, this second end face being more or less flat and more or less perpendicular to the axis of rotation of the rotor, this foot (94) being attached by a leg (93) to the body (90) of the rotor, this leg (93) being adapted and fitted in relation to this second end face of the foot, so that this second end face has one or several supporting edges, and
**in that** the pivoting part (12) has one or several stops (12E), which have a more or less flat face, which is turned towards the support (3), this face of the stop or stops (12E) working together with one or several edges of the foot (94) in the closed position of the locking device, so as to act against the rotor (9) being removed from its housing (24).

7. Knob according to any one of the previous claims, **characterised in that** the plate (13) has a ring (13A) or disc, which has a series of teeth (22) on its curved or more or less cylindrical external face, which are able to work together with one or several teeth (21) of the pivoting part (12) in the working position.

8. Knob according to any one of the previous claims, **characterised in that** the system (11), which allows a rotation movement of the cover and/or support in the open position of the locking device (8), when the element (1) is fixed on the threaded rod (2) or corresponding nut, when the thread torque of the element on the threaded rod or corresponding nut is greater than a maximum given or authorised thread torque (CM), which is greater than this minimum given thread torque (Cm), comprises:
- one or several lugs (30), which are attached to a central body (31), which is integral with the support (3) or cover (5), for which each lug (30) has a free end (32) and an end (33), which is connected to the central body (31) by one or several arms (34), so that the lug (30) in question is moved away from this central body (31), the arm or arms (34) and/or the part of the lug in question, which is adjacent to the arm or arms (34), forming an area of elastic deflection for the lug (30) in question, this area of deflection having more or less an axis of deflection, which is more or less parallel to the axis of rotation (A) of the element (1), each lug (30) having a first face (30A), which is turned towards the central body (31), which is integral with the support or cover, and a second face (30B), which is opposed to this first face, this second face having a series of teeth (30C);
- a ring (13A), which is carried on the plate (13), to which the element (1) is attached, this ring (13A) having an internal face with a series of teeth (35),
in which the teeth (35) of the ring (13) and the teeth (30C) of the lug or lugs (30) are adapted to each other,
* so that, when the thread torque is less than the maximum given or authorised thread torque (CM), the rotation movement of the support or cover in this first direction of rotation of the element involves rotation of the lug or lugs and ring, and therefore the element, and
* so that, when the thread torque is greater than or equal to the maximum given or authorised thread torque (CM), the rotation movement of the support or cover in this first direction of rotation of the element involves rotation of the lug or lugs, as well as their deflection by one or several teeth of the lug or lugs sliding on the teeth of the ring, so that the element is not subject to rotation.

9. Knob according to the claim according to the previous claim, **characterised in that** the ring (13A), which has a series of teeth (35) on its internal face, has a series of teeth (22) on its curved or more or less cylindrical external face, which are able to work together with one or several teeth (21) of the pivoting part (12) in the working position.

10. Knob according to any one of the previous claims, which is associated with an element acting as a nut (1), which is intended to be fixed by rotation on a threaded rod (2), **characterised in that** the plate (13) is associated with a body (113B) forming a chamber (113C), into which the element in the form of a nut (1) extends at least partly, this element (1) comprising a system (110), which has at least one thread, which is adapted for working together with the thread of the rod (2),
**in that** this chamber (113C) has at least one inclined face (113D) in relation to a plane, which is perpendicular to the axis of rotation (R) of the element (1),
**in that** the system (110) comprises at least one moveable part (110A), which has a face (110D), which is adapted to work together with the inclined face (113D) of the chamber (13) with a face (110D) of the system (110), so that the part (110A) may move at least in the chamber (113C) of this body (113B)
- (a) in a direction, which is parallel to the axis of rotation (R) of the cover (5) and/or support (3), between at least a first position, in which the system (110) generates a thread torque of the element (1) on the threaded rod (2), which is less than the minimum given or determined thread torque (Cm), and a second position, for which one face (110D) of the part (110A) is supported on this inclined face (113D) of the chamber (113C), so that the system (110) generates a thread torque of the element (1) on the threaded rod (2) or nut, which is equal to or greater than the minimum given or determined thread torque (Cm), and
- (b) in a radial direction in relation to the axis of rotation (R) of the cover (5) and/or support (3) between a first radial position, in which the element (1) may be displaced axially in relation to the rod (2) with and without a rotation movement of the cover (5) or support (3), and a second radial position, in which the element (1) may be displaced axially in relation to the rod (2) only with a rotation movement of the cover (5) or support (3).

11. Knob according to claim 10, **characterised in that** the axial displacement of the part (110A) in the chamber (113C) between this first position and second position is guided by at least one guiding means (113E), this guiding means (113E) advantageously being a means, which is adapted to limit, preferably avoid, a relative rotation movement between this part (110A) and this plate (13) in relation to the axis of rotation (R) of the cover (5) and/or support (3).

12. Knob according to claim 10 or 11, **characterised in that** the system (110) comprises at least three parts (110A), each of these parts (110A) being able to move at least in the chamber (13C) of this body (13B)
- (a) in a direction, which is parallel to the axis of rotation (R) of the cover (5) and/or support (3), between at least a first position, in which the system (110) generates a thread torque of the element (1) on the threaded rod (2), which is less than the minimum given or determined thread torque (Cm), and a second position, for which a face (110D) of the part (110A) is supported on this inclined face (113D) of the chamber (113C), so that the system (110) generates a thread torque of the element (1) on the threaded rod (2) or nut, which is equal to or greater than the minimum given or determined thread torque (Cm), and
- (b) in a radial direction in relation to the axis of rotation (R) of the cover (5) and/or support (3) between a first radial position, in which the element (1) may be displaced axially in relation to the rod (2) with and without a rotation movement of the cover (5) or support (3), and a second radial position, in which the element (1) may be displaced axially in relation to the rod (2) only with a rotation movement of the cover (5) or support (3).

13. Knob according to claim 12, **characterised in that** the parts (110A) are connected to each other by an elastically deformable or compressible means (115).

14. Knob according to claim 11 or 12, **characterised in that** the parts (110A) each have a throat (110A1) or passage, which is adapted to receive a part of a ring, which is closed or not, or a portion of a ring, this ring or portion of a ring being elastically deformable or compressible (115), when the part moves between this first position and second position, and **in that** the part of the ring or the portion of the ring, which is in the throat, advantageously is adapted to be supported on the inclined face of the chamber (113C) at least in the second position of the parts (110A).

15. System to secure an object by at least screwing at least one element selected from:
- a nut, which is intended to be fixed by rotation on a threaded rod, preferably a pin, exerting a minimum given thread torque, and
- a threaded rod, preferably a pin, which is intended to be fixed by rotation in a nut, exerting a minimum given thread torque,
this rotation of the element being in relation to an axis of rotation corresponding either to the longitudinal axis of the threaded rod or to the central axis of the nut, this rotation working in a first direction, advantageously clockwise, to fix the element on the threaded rod or corresponding nut, and in a second direction, advantageously anticlockwise, which is opposed to this first direction,
in which at least one element is associated with a knob according to any one of the previous claims.

16. System according to the previous claim, **characterised in that** the object to be secured is one or several bikes, which are placed on a bike carrier, transporter or luggage carrier, or one or several skis, which are placed on a ski carrier, or one or several wheels of vehicles, which are attached to a support.

## Patentansprüche

1. Drehgriff kombiniert mit einem Element (1), das ausgewählt ist aus:
- einer Schraubenmutter, die dazu ausgebildet ist, dass sie drehbar an einer Gewindestange (2), bevorzugt einem Schraubenbolzen, festgelegt werden kann, wobei ein vorgegebenes minimales Anzugsmoment ausgeübt wird, und
- einer Gewindestange (2), bevorzugt einem Schraubenbolzen, die dazu ausgebildet ist, dass sie drehbar in einer Schraubenmutter festgelegt werden kann, wobei ein vorgegebenes minimales Anzugsmoment (Cm) ausgeübt wird,
wobei die Drehung des Elements in Bezug auf eine Rotationsachse (A) erfolgt, die entweder mit der Längsachse der Gewindestange oder der Mittelachse der Schraubenmutter korrespondiert, wobei die Drehung in eine erste Richtung (R1), mit Vorteil im Uhrzeigersinn, um das Element an der zugehörigen Gewindestange oder Schraubenmutter festzulegen, und in eine zweite Richtung (R2) bewirkt wird, mit Vorteil entgegen dem Uhrzeigersinn, die der ersten Richtung (R1) entgegengesetzt ist, um das Element aus seiner Festlegungsposition zu lösen,
wobei der Drehgriff umfasst:
- einen Träger (3) mit einem Durchtritt (4) entweder für die Gewindestange (2), die dazu ausgebildet ist, dass sie drehbar am Element in Form einer Schraubenmutter (1) festgelegt werden kann, oder für das Element in Form einer Gewindestange, die dazu ausgebildet ist, dass sie drehbar in einer Schraubenmutter festgelegt werden kann,
- eine Abdeckung (5), die auf dem Träger (3) angebracht ist und mit dem Träger eine Kammer (6) definiert,
- eine Platte (13) kombiniert mit dem Element (1), wobei die Platte in der Kammer gelegen ist und in der Kammer beweglich angeordnet ist, und
- eine Verriegelungsvorrichtung (8) umfassend einen Rotor (9), der durch einen Schlüssel betätigt wird und beweglich ist zwischen einer offenen Position, in der eine Verbindung zwischen einerseits der Platte (13) und andererseits der Abdeckung (5) oder dem Träger (3) ausgebildet ist, so dass mindestens die Umwandlung einer Drehbewegung der Abdeckung oder des Trägers in eine Drehbewegung des Elements (1) zur zugehörigen Gewindestange (2) oder Schraubenmutter in Richtung der Abschraubbewegung des Elements an der zugehörigen Gewindestange oder Schraubenmutter ermöglicht ist, und einer geschlossenen Position, in der die Drehung des Trägers oder der Abdeckung keine Drehung des an der zugehörigen Schraubenmutter oder Gewindestange (2) festgelegten Elements (1) bewirkt,
wobei das Element (1) mit der Platte (13) fest verbunden ist, die drehbar am Träger (3) und/oder der Abdeckung (5) angebracht ist,
**dadurch gekennzeichnet, dass**
er ein System (11) umfasst, das eine Drehbewegung der Abdeckung und/oder des Trägers in der offenen Position der Verriegelungsvorrichtung ermöglicht, während das Element an der zugehörigen Gewindestange oder Schraubenmutter festgelegt wird, wenn das Anzugsmoment des Elements (1) an der zugehörigen Gewindestange (2) oder Schraubenmutter größer ist als ein vorgegebenes oder zulässiges maximales Anzugsmoment (CM), das größer ist als das vorgegebene minimale Anzugsmoment (Cm),
**dadurch**, dass die Verriegelungsvorrichtung (8) ein Teil (12) umfasst, das in der Kammer schwenkbar ist zwischen
- einer Arbeitsposition, in der eine Verbindung zwischen einerseits der Platte (13) und andererseits der Abdeckung (5) oder dem Träger (3) ausgebildet ist, so dass mindestens die Umwandlung einer Drehbewegung der Abdeckung oder des Trägers in eine Drehbewegung des Elements (1) zur zugehörigen Gewindestange (2) oder Schraubenmutter in Richtung der Abschraubbewegung des Elements an der zugehörigen Gewindestange oder der Schraubenmutter ermöglicht ist, wenn das Anzugsmoment des Elements (1) an der zugehörigen Gewindestange (2) oder Schraubenmutter kleiner ist als ein vorgegebenes oder zulässiges maximales Anzugsmoment (CM), das größer ist als das vorgegebene minimale Anzugsmoment (Cm), und
- einer Ruheposition, in der die Drehung des Trägers (3) oder der Abdeckung (5) keine Drehung des an der zugehörigen Schraubenmutter oder Gewindestange (2) festgelegten Elements (1) bewirkt bei einem Anzugsmoment, das größer ist als das vorgegebene minimale Anzugsmoment (Cm),
**dadurch**, dass das schwenkbare Teil (12) einen oder mehrere Zähne (21) aufweist, die dazu geeignet sind, mit einem oder mehreren Zähnen (22) der Platte (13) zu kooperieren, die mit dem Element (1) fest verbunden ist, wenn das schwenkbare Teil (12) sich in Arbeitsposition befindet, wobei die Zähne (21, 22) des schwenkbaren Teils (12) und der Platte (13), die mit dem Element (1) fest verbunden ist, dazu geeignet sind, eine Schwenkbewegung des schwenkbaren Teils (12) aus seiner Arbeitsposition zu einer Ruheposition während der Festlegung des Elements (1) an der zugehörigen Gewindestange (2) oder Schraubenmutter zu gewährleisten, wenn das Anzugsmoment des Elements (1) an der zugehörigen Gewindestange (2) oder Schraubenmutter größer ist als ein vorgegebenes oder zulässiges maximales Anzugsmoment (CM).

2. Drehgriff nach Anspruch 1, **dadurch gekennzeichnet, dass** er ein Mittel umfasst, um das schwenkbare Teil (12) in der Arbeitsposition zu halten, wenn das Anzugsmoment des Elements an der zugehörigen Gewindestange oder Schraubenmutter kleiner ist als ein vorgegebenes oder zulässiges maximales Anzugsmoment (CM), und ein Mittel umfasst, um das schwenkbare Teil in der Ruheposition zu halten (a), wenn die Verriegelungsvorrichtung (8) sich in geschlossener Position befindet, und (b), wenn das Anzugsmoment des Elements (1) an der zugehörigen Gewindestange (2) oder Schraubenmutter größer war als das vorgegebene maximale Anzugsmoment nach eine Bewegung der Verriegelungsvorrichtung in ihre offene Position.

3. Drehgriff nach Anspruch 1 oder 2, **dadurch gekennzeichnet, dass** die Verriegelungsvorrichtung (8) einen Rotor (9) umfasst, der lösbar oder abnehmbar in einer Aufnahme (24), insbesondere einem Stator, der Verriegelungsvorrichtung aufgenommen ist, wobei das Herausnehmen des Rotors aus seiner Aufnahme (24) mittels eines Abziehschlüssels möglich ist, während das Einsetzen des Rotors in seine Aufnahme mit oder ohne Schlüssel möglich ist.

4. Drehgriff nach Anspruch 3, **dadurch gekennzeichnet, dass** der lösbare Rotor (9) einen Anschlag (94) aufweist, der dazu geeignet ist, dass er auf einen Abschnitt des schwenkbaren Teils (12) einwirkt, wenn dieses Teil sich in der Ruheposition befindet, um es in seine Arbeitsposition zu schwenken.

5. Drehgriff nach Anspruch 4, **dadurch gekennzeichnet, dass** der in seine Aufnahme (24) eingesetzte Rotor (9) einen Fuß (94) umfasst, der dazu geeignet ist, dass er mindestens auf einen Abschnitt des schwenkbaren Teils einwirkt, um das Verschwenken dieses Teils zwischen seiner Ruheposition und seiner Arbeitsposition durch eine Drehung des Rotors (9) in seiner Aufnahme (24) zu bewirken,
wobei der Fuß (94) außerdem profiliert ist, damit er beim Einsetzen in seine Aufnahme (24) mindestens auf einen Abschnitt (12E) des schwenkbaren Teils (12) einwirkt, wenn dieses Teil sich in der Ruheposition befindet, um es zu seiner, bevorzugt in seine, Arbeitsposition zu schwenken.

6. Drehgriff nach Anspruch 4, **dadurch gekennzeichnet, dass** der Fuß (94) eine erste Endseite aufweist, die zum Träger (3) gerichtet ist, und eine zweite Endseite aufweist, die der ersten Endseite gegenübersteht, wobei diese zweite Endseite im Wesentlichen eben und im Wesentlichen senkrecht zur Rotationsachse des Rotors ausgebildet ist, wobei der Fuß (94) durch eine Strebe (93) mit dem Körper (90) des Rotors verbunden ist, wobei die Strebe (93) zur zweiten Endseite des Fußes so ausgebildet und angeordnet ist, dass die zweite Endseite einen oder mehrere Anlagekanten aufweist, und
**dadurch**, dass das schwenkbare Teil (12) einen oder mehrere Anschläge (12E) aufweist, die eine im Wesentlichen ebene zum Träger (3) weisende Seite aufweisen, wobei die Seite des einen oder der mehreren Anschläge (12E) mit einem oder mehreren Rändern des Fußes (94) in der geschlossenen Position der Verriegelungsvorrichtung kooperieren, um einem Austritt des Rotors (9) aus seiner Aufnahme (24) entgegenzuwirken.

7. Drehgriff nach einem der vorhergehenden Ansprüche, **dadurch gekennzeichnet, dass** die Platte (13) einen Ring (13A) oder eine Scheibe trägt, der/die auf seiner/ihrer gewölbten oder im Wesentlichen zylindrischen Außenseite eine Reihe von Zähnen (22) aufweist, die geeignet sind, mit einem oder mehreren Zähnen (21) des schwenkbaren Teils (12) in der Arbeitsposition zu kooperieren.

8. Drehgriff nach einem der vorhergehenden Ansprüche, **dadurch gekennzeichnet, dass** das System (11), das eine Drehbewegung der Abdeckung und/oder des Trägers in der offenen Position der Verriegelungsvorrichtung (8) ermöglicht, während der Festlegung des Elements (1) an der zugehörigen Gewindestange (2) oder Schraubenmutter, wenn das Anzugsmoment des Elements an der zugehörigen Gewindestange oder Schraubenmutter größer ist als ein vorgegebenes oder zulässiges maximales Anzugsmoment (CM), das größer ist als ein vorgegebenes minimales Anzugsmoment (Cm), umfasst:
- eine oder mehrere Laschen (30), die an einem mit dem Träger (3) oder der Abdeckung (5) fest verbundenen Zentralkörper (31) befestigt sind, wobei jede Lasche (30) ein freies Ende (32) und ein über einen oder mehrere Arme (34) mit dem Zentralkörper (31) verbundenes Ende (33) aufweist, so dass die jeweilige Lasche (30) vom Zentralkörper (31) beabstandet ist, wobei der oder die Arme (34) und/oder der Abschnitt der zugehörigen Lasche neben dem oder den Armen (34) eine elastische Biegezone für die zugehörige Lasche (30) bilden, wobei die Biegezone im Wesentlichen eine Biegeachse aufweist, die im Wesentlichen parallel zur Rotationsachse (A) des Elements (1) ausgebildet ist, wobei jede Lasche (30) eine erste Seite (30A) aufweist, die zum Zentralkörper (31) gerichtet ist, der mit dem Träger oder der Abdeckung fest verbunden ist, und eine zweite Seite (30B) aufweist, die dieser ersten Seite gegenüberliegt, wobei die zweite Seite eine Reihe von Zähnen (30C) aufweist,
- einen Ring (13A), der von der Platte (13) getragen ist, auf der das Element (1) befestigt ist, wobei der Ring (13A) eine Innenseite aufweist, die eine Reihe von Zähnen (35) trägt, wobei die Zähne (35) des Rings (13) und die Zähne (30C) der einen oder mehreren Laschen (30) zueinander passend sind,
* derart, dass, wenn das Anzugsmoment kleiner ist als das vorgegebene oder zulässige maximale Anzugsmoment (CM), die Drehbewegung des Trägers oder der Abdeckung in die erste Drehrichtung des Elements die Drehung der einen oder mehreren Laschen und des Rings und damit des Elements bewirkt, und
* derart, dass, wenn das Anzugsmoment größer oder gleich dem vorgegebenen oder zulässigen maximalen Anzugsmoment (CM) ist, die Drehbewegung des Trägers oder der Abdeckung in die erste Drehrichtung des Elements die Drehung der einen oder mehreren Laschen sowie ihre Biegung durch ein Verschieben eines oder mehrerer Zähne der einen oder mehreren Laschen auf den Zähnen des Rings bewirkt, so dass das Element keine Drehung erfährt.

9. Drehgriff nach dem vorhergehenden Anspruch, **dadurch gekennzeichnet, dass** der Ring (13A) mit einer Reihe von Zähnen (35) auf seiner Innenseite auf seiner gewölbten oder im Wesentlichen zylindrischen Außenseite eine Reihe von Zähnen (22) aufweist, die geeignet sind, mit einem oder mehreren Zähnen (21) des schwenkbaren Teils (12) in der Arbeitsposition zu kooperieren.

10. Drehgriff nach einem der vorhergehenden Ansprüche, kombiniert mit einem Element, das als Schraubenmutter (1) dient, das dazu ausgebildet ist, dass es drehbar an einer Gewindestange (2) festgelegt werden kann, **dadurch gekennzeichnet, dass** die Platte (13) mit einem Körper (113B) kombiniert ist, der eine Kammer (113C) bildet, in der sich das Element in Form einer Schraubenmutter (1) mindestens teilweise erstreckt, wobei das Element (1) ein System (110) umfasst, das mindestens ein Gewinde aufweist, das zur Kooperation mit dem Gewinde der Stange (2) geeignet ist,
**dadurch**, dass die Kammer (113C) mindestens eine Seite (113D) aufweist, die zu einer Ebene geneigt ist, die zur Rotationsachse (R) des Elements (1) senkrecht steht,
**dadurch**, dass das System (110) mindestens ein bewegliches Teil (110A) umfasst, das eine Seite (110D) aufweist, die zur Kooperation mit der geneigten Seite (113D) der Kammer (13) mit einer Seite (110D) des Systems (110) geeignet ist, so dass das Teil (110A) mindestens in der Kammer (113C) des Körpers (113B) beweglich ist,
- (a) in eine Richtung parallel zur Rotationsachse (R) der Abdeckung (5) und/oder des Trägers (3) zwischen mindestens einer ersten Position, in der das System (110) ein Anzugsmoment des Elements (1) an der Gewindestange (2) erzeugt, das kleiner ist als ein vorgegebenes oder bestimmtes minimales Anzugsmoment (Cm), und einer zweiten Position, bei der eine Seite (110D) des Teils (110A) an der geneigten Seite (113D) der Kammer (113C) derart anliegt, dass das System (110) ein Anzugsmoment des Elements (1) an der Gewindestange (2) oder Schraubenmutter erzeugt, das gleich oder größer ist als das vorgegebene oder bestimmte minimale Anzugsmoment (Cm), und - (b) in eine Richtung radial zur Rotationsachse (R) der Abdeckung (5) und/oder des Trägers (3) zwischen einer ersten radialen Position, in der das Element (1) axial zur Stange (2) mit oder ohne Drehbewegung der Abdeckung (5) oder des Trägers (3) verschoben werden kann, und einer zweiten radialen Position, in der das Element (1) sich nur mit einer Drehbewegung der Abdeckung (5) oder des Trägers (3) axial zur Stange (2) verschieben kann.

11. Drehgriff nach Anspruch 10, **dadurch gekennzeichnet, dass** die Axialverschiebung des Teils (110A) in der Kammer (113C) zwischen der ersten Position und der zweiten Position durch mindestens ein Führungsmittel (113E) geführt ist, wobei das Führungsmittel (113E) mit Vorteil ein Mittel ist, das dazu geeignet ist, eine relative Drehbewegung zwischen dem Teil (110A) und der Platte (13) zu einer Rotationsachse (R) der Abdeckung (5) und/oder des Trägers (3) zu begrenzen, bevorzugt zu verhindern.

12. Drehgriff nach Anspruch 10 oder 11, **dadurch gekennzeichnet, dass** das System (110) mindestens drei Teile (110A) umfasst, wobei jedes der Teile (110A) mindestens in der Kammer (13C) des Körpers (13B) beweglich ist,
- (a) in eine Richtung parallel zur Rotationsachse (R) der Abdeckung (5) und/oder des Trägers (3) zwischen mindestens einer ersten Position, in der das System (110) ein Anzugsmoment des Elements (1) an der Gewindestange (2) erzeugt, das kleiner ist als ein vorgegebenes oder bestimmtes minimales Anzugsmoment (Cm), und einer zweiten Position, bei der eine Seite (110D) des Teils (110A) an der geneigten Seite (113D) der Kammer (113C) derart anliegt, dass das System (110) ein Anzugsmoment des Elements (1) an der Gewindestange (2) oder Schraubenmutter erzeugt, das gleich oder größer ist als das vorgegebene oder bestimmte minimale Anzugsmoment (Cm), und
- (b) in eine Richtung radial zur Rotationsachse (R) der Abdeckung (5) und/oder des Trägers (3) zwischen einer ersten radialen Position, in der das Element (1) axial zur Stange (2) mit oder ohne Drehbewegung der Abdeckung (5) oder des Trägers (3) verschoben werden kann, und einer zweiten radialen Position, in der das Element (1) sich nur mit einer Drehbewegung der Abdeckung (5) oder des Trägers (3) axial zur Stange (2) verschieben kann.

13. Drehgriff nach Anspruch 12, **dadurch gekennzeichnet, dass** die Teile (110A) durch ein elastisch verformbares oder komprimierbares Mittel (115) miteinander oder untereinander verbunden sind.

14. Drehgriff nach Anspruch 11 oder 12, **dadurch gekennzeichnet, dass** die Teile (110A) jeweils eine Ausnehmung (110A1) oder eine Durchführung aufweisen, die geeignet ist, ein Stück eines geschlossenen oder offenen Rings oder einen Abschnitt eines Rings aufzunehmen, wobei der Ring oder Ringabschnitt (115) bei einer Bewegung des Teils zwischen der ersten Position und der zweiten Position elastisch verformbar oder komprimierbar ist, und **dadurch**, dass das Ringstück oder der Ringabschnitt in der Ausnehmung mit Vorteil dazu ausgebildet ist, dass es mindestens in der zweiten Position der Teile (110A) an der geneigten Seite der Kammer (113C) anliegt.

15. System zum Sichern eines Objekts mindestens durch Anschrauben mindestens eines Elements, das ausgewählt ist aus:
- einer Schraubenmutter, die dazu ausgebildet ist, dass sie drehbar an einer Gewindestange, bevorzugt einem Schraubenbolzen, festgelegt werden kann, wobei ein vorgegebenes minimales Anzugsmoment ausgeübt wird, und
- einer Gewindestange, bevorzugt einem Schraubenbolzen, die dazu ausgebildet ist, dass sie drehbar in einer Schraubenmutter festgelegt werden kann, wobei ein vorgegebenes minimales Anzugsmoment ausgeübt wird,
wobei die Drehung des Elements in Bezug auf eine Rotationsachse erfolgt, die entweder mit der Längsachse der Gewindestange oder der Mittelachse der Schraubenmutter korrespondiert, wobei die Drehung in eine erste Richtung, mit Vorteil im Uhrzeigersinn, um das Element an der zugehörigen Gewindestange oder Schraubenmutter festzulegen, und in eine zweite Richtung, mit Vorteil entgegen dem Uhrzeigersinn, die der ersten Richtung entgegengesetzt ist, bewirkt wird,
wobei mindestens ein Element mit einem Drehgriff nach einem der vorhergehenden Ansprüche kombiniert ist.

16. System nach dem vorhergehenden Anspruch, **dadurch gekennzeichnet, dass** das zu sichernde Objekt ein oder mehrere Fahrräder auf einem Fahrradträger, ein Ventil, einen Gepäckträger, ein oder mehrere Skier auf einem Skiträger, ein oder mehrere Fahrzeugräder auf einem Träger angebracht darstellt.
